# EUROPÄISCHE PATENTANMELDUNG

(11) **EP 2 908 609 A1**
(43) Veröffentlichungstag der Anmeldung: **19.08.2015**
(21) Anmeldenummer: 14152711.9
(22) Anmeldetag: 27.01.2014
(51) Int. Cl.: H05B 37/02, H05B 33/08, F21S 8/10

(54) **Leuchtmittel und hiermit ausgestattete Kraftfahrzeugleuchte sowie Verfahren zu deren Betrieb**

(71) Anmelder: odelo GmbH, 70329 Stuttgart (DE)
(72) Erfinder: Schwelger, Veit, 70372 Stuttgart (DE); Vollmer, Marco, 71332 Waiblingen (DE)
(74) Vertreter: Benninger, Johannes

(57) **Zusammenfassung**

Es werden ein Leuchtmittel (100) umfassend mindestens zwei OLEDs (20) als Lichtquellen, eine mit mindestens einem solchen Leuchtmittel (100) ausgestattete Kraftfahrzeugleuchte (01) sowie ein Verfahren zum Betrieb mindestens eines derartigen Leuchtmittels (100) und/oder einer mit wenigstens einem solchen Leuchtmittel (100) ausgestatteten Kraftfahrzeugleuchte (01) beschrieben. Dabei ist vorgesehen, dass
- eine durch mehrere als Lichtquellen des zur Erfüllung einer oder mehrerer Lichtfunktionen vorgesehenen Leuchtmittels (100) dienenden OLEDs (20) gebildete, bei Betrieb des Leuchtmittels (100) leuchtende Fläche (22) in zwei oder mehr Partien (23, 24) segmentiert wird,
- jede Partie (23, 24) mindestens eine OLED (20) umfasst, und
- die Segmentierung vorzugsweise gleichmäßig über die bei Betrieb des Leuchtmittels (100) leuchtende Fläche (22) hinweg erfolgt,

wobei das Verfahren vorsieht:
- die Stromzufuhr zumindest der OLEDs (20) unterschiedlicher Partien (23, 24) jeweils separat zu schalten, und
- abhängig von einem Ergebnis eines Vergleichs:
- mindestens einer Temperatur mit wenigstens einer Schwellentemperatur und/oder
- mindestens einer zur Stromversorgung einer oder mehrerer OLEDs (20) vorgesehenen Versorgungsspannung mit wenigstens einer Schwellenversorgungsspannung

- zur Kompensation einer erhöhten Helligkeit der OLEDs (20) der leuchtenden Fläche (22) vorgesehen ist, bis auf mindestens eine verbleibende Partie (24) wenigstens eine Partie (23) von der Stromzufuhr zu trennen und/oder
- zur Sicherstellung einer zur Aufrechterhaltung eines zum ordnungsgemäßen Betrieb der OLEDs (20) erforderlichen, im Wesentlichen konstanten Stroms notwendigen erhöhten Versorgungsspannung vorgesehen ist, die Verschaltung von die Stromzufuhr der jeweils mindestens eine OLED (20) umfassenden Partien (23, 24) der leuchtenden Fläche (22) des Leuchtmittels (100) besorgenden Stromversorgungen (250, 251, 252) zu ändern.

## Beschreibung

Die Erfindung betrifft ein Leuchtmittel mit mindestens zwei OLEDs als Lichtquellen gemäß dem Oberbegriff des Anspruchs 1 und eine mit mindestens einem derartigen Leuchtmittel ausgestattete Kraftfahrzeugleuchte gemäß dem Oberbegriff des Anspruchs 10 sowie ein Verfahren zum Betrieb mindestens eines derartigen Leuchtmittels und/oder einer mit wenigstens einem solchen Leuchtmittel ausgestatteten Kraftfahrzeugleuchte gemäß dem Oberbegriff des Anspruchs 14.

Eine typische Kraftfahrzeugleuchte umfasst einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Kraftfahrzeugleuchte.

Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest. Dabei sind je nach Lichtfunktion auch Raumwinkelbereiche vorgegeben, in die kein oder nur begrenzt Licht abgestrahlt werden darf, beispielsweise um eine Blendwirkung anderer Verkehrsteilnehmer auszuschließen.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Kraftfahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Als Lichtquellen kommen in Kraftfahrzeugleuchten Glühlampen, Gasentladungslampen sowie unter anderem wegen ihres geringen Stromverbrauchs und geringen Bauraumbedarfs vermehrt Leuchtdioden zum Einsatz. Letztere bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

In Verbindung mit der Verwendung von LEDs als Lichtquellen in einer Kraftfahrzeugleuchte ist bekannt, mehrere LEDs von außerhalb des Leuchteninnenraums durch die Lichtscheibe hindurch sichtbar auf einer Fläche anzuordnen, welche bei eingeschalteten LEDs durch die Lichtscheibe hindurch als leuchtende Fläche wahrgenommen wird, oder die LEDs in einem von außerhalb des Leuchteninnenraums durch die Lichtscheibe hindurch nicht einsehbaren Bereich anzuordnen, wobei das von den LEDs abgestrahlte Licht über einen Reflektor und/oder einen Lichtleiter in Richtung der Lichtscheibe verteilt und umgelenkt wird, welcher Reflektor und/oder welcher Lichtleiter dann von außerhalb des Leuchteninnenraums durch die Lichtscheibe hindurch gesehen als leuchtende Fläche wahrgenommen wird, von welcher aus das Licht schließlich durch die Lichtscheibe hindurch aus dem Leuchteninnenraum austreten kann.

Nachteilig an beiden Varianten ist neben dem immer noch teils erheblichen Bauraumbedarf im Leuchteninnenraum der notwendige, nicht unerhebliche Aufwand, um ein homogenes Erscheinungsbild der leuchtenden Fläche zu erhalten.

Eine Behebung dieser Nachteile verspricht die Verwendung organischer Leuchtdioden (Organic Light Emitting Diode; OLED) als Lichtquellen.

Eine OLED ist ein leuchtendes Dünnschichtbauelement aus organischen halbleitenden Materialien mit mindestens einer Emitterschicht, das sich von den anorganischen Leuchtdioden (LED) dadurch unterscheidet, dass keine einkristallinen Materialien erforderlich sind. Im Vergleich zu anorganischen LEDs lassen sich organische Leuchtdioden daher in kostengünstiger Dünnschichttechnik herstellen. OLEDs ermöglichen dadurch die Herstellung flächiger Lichtquellen, die einerseits sehr dünn und andererseits als durch die Lichtscheibe einer Kraftfahrzeugleuchte hindurch sichtbare leuchtende Fläche eingesetzt einen besonders homogenes Erscheinungsbild aufweisen.

Um OLEDs als Lichtquellen von für den Einsatz in Kraftfahrzeugleuchten vorgesehenen Leuchtmitteln verwenden zu können, müssen beispielsweise durch technische Anforderungen vorgegebene Umgebungsbedingungen beherrscht werden, wie sie beim Einsatz in Kraftfahrzeugleuchten auftreten. Hierbei handelt es sich vor allem um technische Anforderungen hinsichtlich mechanischer und thermischer Stabilität, wie sie im Automobilbereich beispielsweise durch den Standard LV 124 vorgegeben sind.

Eine typische technische Anforderung hieraus bezüglich thermischer Stabilität betrifft den sowohl im Warmzustand bei eingeschaltetem Leuchtmittel, als auch im Kaltzustand bei ausgeschaltetem Leuchtmittel, sowie bei der Inbetriebnahme aus dem Kaltzustand zu ertragenden Temperaturbereich, innerhalb welchen Temperaturbereichs sämtliche zur Erfüllung einer Lichtfunktion in einer Kraftfahrzeugleuchte verbauten Leuchtmittel die Lichtverteilungen der durch sie zu bewältigenden Lichtfunktionen jeweils vollständig erfüllen leisten müssen. Die diesbezügliche technische Anforderung sieht im Kraftfahrzeug- bzw. Automobilbereich einen Temperaturbereich von -40°C bis 80°C vor. Darüber hinaus gibt es auch technische Anforderungen für Temperaturbereiche mit höheren und/oder niedrigeren Temperaturgrenzen.

Dennoch sind höhere oder tiefere Temperaturen als in den genannten Anforderungen in der Realität nicht auszuschließen und möglich. Beispielsweise bei Sonneneinstrahlung in heißen Wüstengebieten können in einer Leuchte oder an Leuchtenteilen auch Temperaturen von über 80°C auftreten, ebenso wie in arktischen Regionen beispielsweise bei klarem Nachthimmel Temperaturen von unter minus 40°C auftreten können.

Bei der Verwendung von OLEDs ergibt sich hierbei die spezielle Problemstellung, dass sich bei gleichbleibendem, an die OLED angelegtem Strom die Spannung über einen großen Bereich mit der Temperatur ändert. Speziell im Bereich unter etwa 0 °C steigt die Spannung bei konstanter Stromstärke sehr stark an. Dies unterscheidet sie - elektrisch gesehen - stark von LEDs. Hierdurch wird die elektrische Ansteuerung der OLED mittels Schaltungen schwierig oder mit der bislang für LEDs eingesetzten Schaltungstechnik zumindest für den Automobilbereich mit seinen begrenzten Bordnetzspannungen äußerst aufwändig oder gar unmöglich.

Darüber hinaus nimmt auch bei OLEDs genauso wie bei LEDs deren Wirkungsgrad mit sinkender Temperatur zu. In Verbindung mit stark steigender Spannung unter etwa 0 °C steigt damit die Leuchtstärke von OLEDs überproportional an, wodurch mit OLEDs als Lichtquellen ausgestattete Leuchtmittel zur Erfüllung einer Lichtfunktion in einer Kraftfahrzeugleuchte innerhalb eines Temperaturbereichs unter etwa 25°C, insbesondere unter etwa 0 °C, die ihnen zugeteilten Lichtverteilungen nicht mehr zu erfüllen in der Lage sind, weil sie zu viel Licht auch in Raumwinkelbereiche abstrahlen, die beispielsweise dunkel bleiben müssen, wobei kein Licht in diesen betroffenen Raumwinkelbereichen abgestrahlt werden darf, oder die eine vorgegebene Helligkeit nicht überschreiten dürfen, wobei in diesen betroffenen Raumwinkelbereichen nur begrenzt Licht abgestrahlt werden darf, beispielsweise um eine Blendwirkung anderer Verkehrsteilnehmer auszuschließen

Eine Aufgabe der Erfindung ist es, ein Leuchtmittel mit OLEDs als Lichtquellen sowie eine Kraftfahrzeugleuchte mit mindestens einem solchen zur Erfüllung wenigstens einer Lichtfunktion der Kraftfahrzeugleuchte vorgesehenen Leuchtmittel nebst einem Verfahren zum Betrieb mindestens eines solchen Leuchtmittels und/oder einer mit zumindest einem derartigen, zur Erfüllung wenigstens einer Lichtfunktion vorgesehenen Leuchtmittel ausgestatteten Kraftfahrzeugleuchte anzugeben, welche eine Kompensation des erhöhten Lichtstroms bzw. der erhöhten Helligkeit von OLEDs in einem Temperaturbereich, bei dem OLEDs zur Aufrechterhaltung des zu deren ordnungsgemäßen Betriebs erforderlichen Stroms einen im Vergleich beispielsweise zu LEDs ansteigenden Spannungsbedarf aufweisen, ermöglichen.

Die Aufgabe wird jeweils gelöst mit den Merkmalen der unabhängigen Ansprüche. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft ein Leuchtmittel mit mindestens zwei OLEDs als Lichtquellen, die bei Betrieb des Leuchtmittels eine leuchtende Fläche zur Erfüllung einer Lichtfunktion bilden. Die leuchtende Fläche ist in mindestens zwei Partien zu jeweils wenigstens einer OLED segmentiert. Wenigstens eine erste OLED ist dabei Teil einer ersten Partie und wenigstens eine zweite OLED ist Teil einer zweiten Partie. Ist die leuchtende Fläche in drei oder mehr Partien segmentiert, so ist zumindest eine dritte OLED Teil einer dritten Partie und so weiter.

Vorteile gegenüber dem Stand der Technik sind, dass wenn nicht alle OLEDs der leuchtenden Fläche beispielsweise aufgrund eines begrenzten Versorgungsspannungsniveaus insbesondere bei kalten Umgebungsbedingungen mit niederen Temperaturen von beispielsweise unter 0 °C betrieben werden können, da die zur Aufrechterhaltung eines zum ordnungsgemäßen Betrieb von OLEDs notwendigen, im Wesentlichen gleichbleibenden Stroms erforderliche Versorgungsspannung beispielsweise eine Serienschaltung mehrerer OLEDs nicht zulässt, so dass ansonsten im Normalbetrieb in Serie geschaltete OLEDs beispielsweise teils überbrückt und/oder teils parallel geschaltet werden müssen, die beispielsweise überbrückten OLEDs zu nicht überbrückten OLEDs benachbart sind und dadurch von deren Selbsterwärmung mit aufgewärmt werden. Die Segmentierung erlaubt hierdurch eine beschleunigte Selbsterwärmung aller eine leuchtende Fläche bildenden OLEDs bei niedrigen Temperaturen unterhalb von beispielsweise 0°C, gleich ob diese bei entsprechend niedrigen Temperaturen betrieben werden, oder beispielsweise aufgrund einer Überbrückung nicht. Allein durch eine vermittels der Segmentierung erhaltenen Nachbarschaft zu mindestens einer auch bei niedriger Temperatur betriebenen OLED wärmt sich eine benachbarte, erst ab einer höheren Temperatur betriebene OLED auf, wodurch das gesamte Leuchtmittel schnelle in Normalbetrieb gehen kann.

Die Segmentierung sieht eine vorzugsweise gleichmäßige, regelmäßige Verteilung der OLEDs der verschiedenen Partien über die leuchtende Fläche hinweg vor.

Bilden zwei oder mehrere OLEDs eine Partie der segmentierten leuchtenden Fläche, so sieht die Segmentierung unter gleichmäßiger, regelmäßiger Verteilung der OLEDs vor, dass sich innerhalb der leuchtenden Fläche zwischen zwei OLEDs einer Partie zumindest je eine OLED der mindestens einen verbleibenden Partie befinden.

Sind zwei oder mehr OLEDs je Partie vorgesehen, so sind die OLEDs jeder Partie zu einer Gruppe von OLEDs verschaltet. Damit sind die ersten OLEDs der ersten Partie zu einer ersten Gruppe, die zweiten OLEDs der zweiten Partie zu einer zweiten Partie, und wenn die leuchtende Fläche in drei oder mehr Partien segmentiert ist, die dritten OLEDs der dritten Partie zu einer dritten Gruppe von OLEDs verschaltet, und so weiter.

Sind zwei oder mehr OLEDs je Partie vorgesehen, so können die zu einer Gruppe von OLEDs verschalteten OLEDs jeder Partie innerhalb ihrer Gruppe beispielsweise parallel und/oder in Serie (in Reihe) elektrisch verschaltet sein.

Das Leuchtmittel umfasst eine Schaltungsanordnung zur Stromversorgung der OLEDs. Die Schaltungsanordnung weist getrennte elektrische Anschlüsse für OLEDs unterschiedlicher Partien der bei Betrieb des Leuchtmittels leuchtenden Fläche auf.

Die getrennten elektrischen Anschlüsse für OLEDs unterschiedlicher Partien der bei Betrieb des Leuchtmittels leuchtenden Fläche erlauben die OLED bzw. die OLEDs einer ersten Partie der leuchtenden Fläche bei einem Betrieb des Leuchtmittels beispielsweise unterhalb einer vorgegebenen Schwellentemperatur und/oder bei und oberhalb einer vorgegebenen Schwellenversorgungsspannung, welche zur Aufrechterhaltung eines zum ordnungsgemäßen Betrieb der OLEDs des Leuchtmittels erforderlichen, im Wesentlichen konstanten Stroms notwendig ist abzuschalten und/oder zu überbrücken und/oder von der Stromzufuhr zu trennen, ohne die OLED bzw. die OLEDs einer zweiten, verbleibenden Partie ebenfalls abzuschalten und/oder von der Stromzufuhr zu trennen, sondern weiterhin mit der Stromzufuhr verbunden zu lassen.

Dabei kann wahlweise bei allen vorher und nachfolgend noch beschriebenen Ausführungsvarianten ein oberhalb an eine Schwellentemperatur angrenzender Temperaturbereich die Schwellentemperatur umfassen, oder ein unterhalb einer Schwellentemperatur an diese angrenzender Temperaturbereich, wobei je nach Richtung einer Überschreitung einer Schwellentemperatur auch unterschiedliche Schwellentemperaturen vorgegeben sein können. Im Nachfolgenden wird deshalb auf den Umstand, welcher Fall eines Ergebnisses eines Vergleichs einer erfassten Temperatur mit einer Schwellentemperatur die Schwellentemperatur selbst umfasst, nicht mehr explizit eingegangen, weil die Erfindung es im Sinne von wahlweise sowohl erlaubt, dass ein Temperaturbereich unterhalb einer Schwellentemperatur die Schwellentemperatur umfasst, als auch, dass ein Temperaturbereich oberhalb einer Schwellentemperatur die Schwellentemperatur umfasst.

Wichtig ist in diesem Zusammenhang auch hervorzuheben, dass eine Trennung von der Stromversorgung im Sinne der Erfindung auch dann vorliegt, wenn weiterhin ein Leckstrom durch mindestens eine OLED fließt, welcher jedoch nicht ausreicht, eine Lichtemission einer OLED zu erzeugen.

Alternativ oder zusätzlich erlauben die getrennten elektrischen Anschlüsse für OLEDs unterschiedlicher Partien der bei Betrieb des Leuchtmittels leuchtenden Fläche die elektrische Verschaltung der OLEDs der verschiedenen Partien der leuchtenden Fläche während des Betriebs des Leuchtmittels beispielsweise abhängig von mindestens einer vorgegebenen Schwellentemperatur und/oder mindestens einer vorgegebenen Schwellenversorgungsspannung, welche zur Aufrechterhaltung eines zum ordnungsgemäßen Betrieb der OLEDs des Leuchtmittels erforderlichen, im Wesentlichen konstanten Stroms notwendig ist, zu verändern.

Die Schaltungsanordnung kann Schaltungsmittel umfassen, welche in Abhängigkeit von der zur Aufrechterhaltung eines bei eingeschaltetem Leuchtmittel zum ordnungsgemäßen Betrieb dessen OLEDs erforderlichen, im Wesentlichen gleichbleibenden Stroms notwendigen Spannung die Partien der leuchtenden Fläche bildenden OLEDs segmentweise zu- und abschaltet.

Die Schaltungsmittel veranlassen hierbei eine Abschaltung mindestens eines elektrischen Anschlusses für die wenigstens eine, eine Partie der bei Betrieb des Leuchtmittels leuchtenden Fläche bildende OLED, wobei zumindest ein elektrischer Anschluss für die wenigstens eine, eine mit der Stromzufuhr verbunden verbleibende Partie der bei Betrieb des Leuchtmittels leuchtenden Fläche bildende OLED weiterhin mit der Stromversorgung verbunden bleibt.

Die getrennten elektrischen Anschlüsse für OLEDs unterschiedlicher Partien der bei Betrieb des Leuchtmittels leuchtenden Fläche erlauben die OLED bzw. die OLEDs einer ersten Partie der leuchtenden Fläche bei einem Betrieb des Leuchtmittels beispielsweise unterhalb einer vorgegebenen Schwellentemperatur und/oder oberhalb einer vorgegebenen Schwellenversorgungsspannung, welche zur Aufrechterhaltung eines zum ordnungsgemäßen Betrieb der OLEDs des Leuchtmittels erforderlichen, im Wesentlichen konstanten Stroms notwendig ist abzuschalten und/oder zu überbrücken und/oder von der Stromzufuhr zu trennen, ohne die OLED bzw. die OLEDs einer zweiten, verbleibenden Partie ebenfalls abzuschalten und/oder von der Stromzufuhr zu trennen, sondern weiterhin mit der Stromzufuhr verbunden zu lassen.

Da bereits ausgeführt wurde, dass die Schaltungsanordnung getrennte elektrische Anschlüsse zumindest für die OLEDs unterschiedlicher Partien der beim Betrieb des Leuchtmittels leuchtenden Fläche aufweist, wird im Nachfolgenden nicht mehr explizit erwähnt, dass die Schaltungsmittel die Schaltungsanordnung veranlassen, einzelne elektrische Anschlüsse abzuschalten und/oder zu überbrücken und/oder von der Stromzufuhr zu trennen und/oder die elektrische Verschaltung der elektrischen Anschlüsse zu verändern, und es ist statt dessen vereinfacht von einer Stromzufuhr bzw. Trennung von der Stromzufuhr und/oder Überbrückung und/oder Abschaltung und/oder Veränderung der elektrischen Verschaltung von Partien und/oder einer oder mehrerer OLEDs des Leuchtmittels die Rede.

Um bis auf wenigstens eine verbleibende Partie der bei Betrieb des Leuchtmittels leuchtenden Fläche eine temperaturabhängige Abschaltung und/oder Überbrückung und/oder Trennung von der Stromzufuhr einer oder mehrerer, durch jeweils mindestens eine OLED gebildeten Partien der bei Betrieb des Leuchtmittels leuchtenden Fläche zu ermöglichen, können die Schaltungsmittel mindestens einen Temperaturfühler aufweisen.

Der Temperaturfühler kann alternativ oder zusätzlich zu einer Abschaltung und/oder Überbrückung und/oder Trennung von der Stromzufuhr einer oder mehrerer, durch jeweils mindestens eine OLED gebildeten Partien der bei Betrieb des Leuchtmittels leuchtenden Fläche oder gerade vermittels einer Abschaltung und/oder Überbrückung und/oder Trennung von der Stromzufuhr einer oder mehrerer, durch jeweils mindestens eine OLED gebildeten Partien der bei Betrieb des Leuchtmittels leuchtenden Fläche eine Versorgungsspannung der OLEDs des Leuchtmittels abhängig von einer von ihm erfassten Temperatur regeln.

Der Temperaturfühler weist hierzu ein einer von ihm erfassten Temperatur proportionales Ausgangssignal auf. Der Temperaturfühler dient zur Erfassung wenigstens einer Temperatur, beispielsweise einer Umgebungstemperatur mindestens einer OLED des Leuchtmittels oder der Temperatur mindestens einer OLED des Leuchtmittels.

Bei einer vom Temperaturfühler erfassten Temperatur, welche niedriger ist, als eine vorgegebene Schwellentemperatur von beispielsweise 25°C oder 0°C, regelt das Ausgangssignal des Temperaturfühlers die Versorgungsspannung der OLEDs derart, dass diese beispielsweise mit weiter absinkender Temperatur kontinuierlich im Sinne von stetig, oder in einer oder mehreren diskreten Stufen diskontinuierlich im Sinne von unstetig steigt.

Dies kann beispielsweise in diskreten Stufen erfolgen, indem OLEDs einer unterhalb einer vorgegebenen Schwellentemperatur abzuschaltenden Partie der bei Betrieb des Leuchtmittels leuchtenden Fläche in Reihe mit OLEDs einer unterhalb einer vorgegebenen Schwellentemperatur in Betrieb verbleibenden Partie geschaltet sind, und die OLEDs der abzuschaltende Partie überbrückt werden. Dadurch liegt bei abgeschalteter Partie eine höhere Versorgungsspannung an den OLEDs der verbleibenden Partie an.

In Verbindung mit einem Temperaturfühler, der eine Versorgungsspannung der OLEDs des Leuchtmittels abhängig von einer von ihm erfassten Temperatur regelt, ist demnach vorgesehen, dass wenn die Temperatur unter eine vorgegebene Schwellentemperatur von beispielsweise 25 °C oder 0 °C abfällt, die Versorgungsspannung zur Aufrechterhaltung eines zum ordnungsgemäßen Betrieb einer OLED erforderlichen, im Wesentlichen gleichbleibenden Stroms, erhöht wird. In umgekehrter Richtung wird die Versorgungspannung abgesenkt, wenn die Temperatur über eine vorgegebene Schwellentemperatur von beispielsweise 0°C oder 25°C steigt.

Übersteigt die Versorgungsspannung mindestens eine vorgegebene Schwellenversorgungsspannung, so wird wenigstens eine Partie der leuchtenden Fläche abgeschaltet, indem die gemäß der Segmentierung der leuchtenden Fläche zu einer Partie zusammengefassten OLEDs oder die gemäß der Segmentierung der leuchtenden Fläche eine Partie bildende OLED durch Trennung von der Stromversorgung abgeschaltet wird. Dies kann beispielsweise durch eine Überbrückung der entsprechenden mindestens einen OLED einer Partie der leuchtenden Fläche erfolgen. Übersteigt die vom Temperaturfühler erfasste Temperatur beispielsweise aufgrund einer Selbsterwärmung des Leuchtmittels durch Betrieb der mindestens einen OLED der verbleibenden mindestens einen Partie die Schwellentemperatur, wird die Versorgungsspannung entsprechend abgesenkt und die abgeschaltete Partie der leuchtenden Fläche zusätzlich zur verbleibenden Partie wieder in Betrieb genommen, so dass oberhalb einer vorgegebenen Schwellentemperatur alle OLEDs des Leuchtmittels und damit alle Partien der segmentierten leuchtenden Fläche (wieder) in Betrieb sind.

Bei einer Segmentierung der bei Betrieb des Leuchtmittels leuchtenden Fläche in zwei Partien bedeutet dies eine diskrete Stufe, wobei unterhalb der diskreten Stufe vorzugsweise genau die Hälfte der OLEDs des Leuchtmittels in Betrieb sind, und oberhalb der diskreten Stufe alle OLEDs des Leuchtmittels in Betrieb sind.

Ist die leuchtende Fläche in mehr als zwei Partien segmentiert, sind mindestens zwei diskrete Stufen vorgesehen, wobei die Stufen anhand einer entsprechenden Anzahl von vorgegebenen Schwellentemperaturen und/oder vorgegebenen Schwellenversorgungsspannungswerten festgelegt sind.

Die Kopplung kann entsprechend an die von Temperaturfühler erfasste Temperatur erfolgen.

Alternativ oder zusätzlich können die Schaltungsmittel Versorgungsspannungsüberwachungsmittel umfassen, welche die Höhe einer Versorgungsspannung der OLEDs des Leuchtmittels erfassen. Dies kann beispielsweise sinnvoll sein, wird die Versorgungsspannung der OLEDs von außerhalb des Leuchtmittels, beispielsweise temperaturabhängig geregelt.

Die Versorgungsspannungsüberwachungsmittel weisen hierzu ein mindestens einer von ihnen erfassten Versorgungsspannung proportionales Ausgangssignal auf. Die Versorgungsspannungsüberwachungsmittel dienen zur Erfassung der Höhe wenigstens einer zur Aufrechterhaltung eines zum ordnungsgemäßen Betrieb wenigstens einer OLED des Leuchtmittels erforderlichen, im Wesentlichen gleichbleibenden Stroms vorgesehenen Versorgungsspannung der OLEDs des Leuchtmittels.

Die Zu- und Abschaltung der Partien der leuchtenden Fläche erfolgt hierbei genau wie zuvor in Verbindung mit einem Temperaturfühler beschrieben, mit dem Unterschied, dass die Zu- und Abschaltung anhand des Ausgangssignals der Versorgungsspannungsüberwachungsmittel geschaltet wird. Dabei sind ebenfalls eine oder mehrere diskrete Stufen in Abhängigkeit von der Anzahl der verschiedenen Partien, in welche die bei Betrieb des Leuchtmittels leuchtende Fläche segmentiert ist, vorgesehen. Eine Abschaltung einer Partie findet hierbei bei einer Übersteigung einer vorgegebenen Schwellenversorgungsspannung statt, eine Zuschaltung einer Partie bei einer Unterschreitung einer vorgegebenen Schwellenversorgungsspannung.

Der Temperaturfühler und/oder die Versorgungsspannungsüberwachungsmittel können im einfachsten Fall zumindest mit einer wenigstens einen Schalter umfassenden Teil der Schaltungsanordnung verbunden sein. Der wenigstens eine Schalter wird bei einem einer von dem Temperaturfühler erfassten Temperatur, die kleiner ist, als eine vorgegebene Schwellentemperatur von beispielsweise 0°C proportionalen Ausgangssignal von dem Temperaturfühler und/oder bei einem einer von den Versorgungsspannungsüberwachungsmitteln erfassten Versorgungsspannung, die höher ist, als eine vorgegebene Schwellenversorgungsspannung von beispielsweise 7V proportionalen Ausgangssignal von den Versorgungsspannungsüberwachungsmitteln derart geschaltet, dass bis auf zumindest eine durch mindestens eine OLED gebildete verbleibende Partie der bei Betrieb des Leuchtmittels leuchtenden Fläche, eine oder mehrere, durch jeweils mindestens eine OLED gebildete Partie der bei Betrieb des Leuchtmittels leuchtenden Fläche bei Betrieb des Leuchtmittels abgeschaltet ist. Der wenigstens eine Schalter wird entsprechend bei einem einer von dem Temperaturfühler erfassten Temperatur, die höher liegt, als eine vorgegebene Schwellentemperatur von beispielsweise 0°C proportionalen Ausgangssignal von dem Temperaturfühler und/oder bei einem einer von den Versorgungsspannungsüberwachungsmitteln erfassten Versorgungsspannung, die niedriger ist, als eine vorgegebene Schwellenversorgungsspannung von beispielsweise 7V proportionalen Ausgangssignal von den Versorgungsspannungsüberwachungsmitteln derart geschaltet, dass die eine oder mehreren, durch jeweils mindestens eine OLED gebildeten Partien der bei Betrieb des Leuchtmittels leuchtenden Fläche, welche bei einem einer von dem Temperaturfühler erfassten Temperatur, die kleiner ist, als eine vorgegebene Schwellentemperatur von beispielsweise 0°C proportionalen Ausgangssignal und/oder bei einem einer von den Versorgungsspannungsüberwachungsmitteln erfassten Versorgungsspannung, die höher ist, als eine vorgegebene Schwellenversorgungsspannung von beispielsweise 7V proportionalen Ausgangssignal bei Betrieb des Leuchtmittels abgeschaltet ist, dann zugeschaltet wird.

Alternativ oder zusätzlich kann die Schaltungsanordnung einen Proportionalregler umfassen, der bei Betrieb des Leuchtmittels in Abhängigkeit von der vom Temperaturfühler erfassten Temperatur unterhalb einer vorgegebenen Schwellentemperatur und/oder in Abhängigkeit von der von den Versorgungsspannungsüberwachungsmitteln erfassten Versorgungsspannung oberhalb einer vorgegebenen Schwellenversorgungsspannung um so mehr Partien abschaltet, je tiefer die erfasste Temperatur unterhalb der vorgegebenen Schwellentemperatur und/oder je höher die erfasste Versorgungsspannung oberhalb der vorgegebenen Schwellenversorgungsspannung liegt.

Vorteile gegenüber dem Stand der Technik ergeben sich unter Anderem durch eine Anpassung der Helligkeit einer im Betrieb eines Leuchtmittels durch dessen als Lichtquellen eingesetzte OLEDs gebildeten leuchtenden Fläche an einen breiten Temperaturbereich. Insbesondere bei Umgebungstemperaturen von unter 0°C kann dadurch der sich auf die Helligkeit der leuchtenden Fläche auswirkende, unvorteilhafte Strom-Spannungs-Verlauf von OLEDs zumindest in einer oder mehreren diskreten Stufen angepasst werden, wodurch OLEDs im Kraftfahrzeugbereich einsetzbar werden.

Die Erfindung stellt damit eine Möglichkeit dar, OLEDs in Kraftfahrzeugleuchten in einem großen Temperaturbereich zu betreiben.

OLEDs werden, wie auch LEDs, stromgetrieben. OLEDs weisen als stromgetriebene Lichtquellen unterhalb von Betriebstemperaturen von etwa 25°C einen großen Spannungsanstieg bei sinkender Temperatur auf. Verglichen mit den Strom-Spannungs-Diagrammen (I-U-Diagramm) von LEDs verhalten sie sich damit deutlich verschieden mit einer starken Verschiebung und Verlaufsänderung der Kennlinie im I-U-Diagramm unterhalb einer Temperatur von etwa 25°C. Um diesem Effekt einer starken Verschiebung und Verlaufsänderung der Kennlinie mit der Temperatur einer OLED im Vergleich zu einer LED entgegenzuwirken, ist es erforderlich, OLEDs bei Temperaturen unterhalb einer vorgegebenen Schwellentemperatur von beispielsweise 0°C mit einer höheren Versorgungsspannung zu beaufschlagen. Hierdurch weisen OLEDs unterhalb einer vorgegebenen Schwellentemperatur, wenn die Versorgungsspannung zur Aufrechterhaltung eines zum ordnungsgemäßen Betrieb von OLEDs erforderlichen Stroms entsprechend hoch ist, eine erhöhte Helligkeit auf, dass sie ohne weitere Maßnahmen nicht geeignet sind, in einem derart niedrigen Temperaturbereich die durch eine Lichtfunktion vorgegebene Lichtverteilung zu erfüllen. Durch eine segmentweise Abschaltung von Partien der leuchtenden Fläche bildenden OLEDs kann dies kompensiert werden.

Die Erfindung löst damit das Problem, die aus dem temperaturabhängigen Spannungsverlauf von OLEDs resultierenden Helligkeitsschwankungen in den Griff zu bekommen.

Erfolgt die Abschaltung einzelner jeweils mindestens eine OLED umfassender Partien durch eine Überbrückung der mindestens einen OLED der entsprechenden Partie, und ist eine oder sind mehrere verbleibende, jeweils mindestens eine OLED umfassende Partien in Reihe zu der überbrückten bzw. überbrückbaren Partie angeordnet, so kann durch die Abschaltung gleichzeitig eine Anpassung der zur Aufrechterhaltung eines zum ordnungsgemäßen Betrieb von OLEDs der mindestens einen verbleibenden Partie erforderlichen, im Wesentlichen gleichbleibenden Stroms notwendigen Spannung erfolgen, weil durch die Überbrückung einer mindestens eine OLED umfassenden Partie in einer Reihenschaltung mehrerer jeweils mindestens eine OLED umfassender Partien an der überbrückten, mindestens eine OLED umfassenden Partie kein wesentlicher Spannungsabfall auftritt, wodurch sich die anliegende Spannung auf die mindestens eine verbleibende, mindestens eine OLED umfassende Partie zwei oder mehrerer in Reihe geschalteter, jeweils mindestens eine OLED umfassender Partien verteilt.

Die Schaltungsanordnung kann alternativ oder zusätzlich Schaltungsmittel umfassen, welche die elektrische Verschaltung der via der Schaltungsanordnung bei Betrieb des Leuchtmittels mit Strom versorgten OLEDs in Abhängigkeit von einer von mindestens einem Temperaturfühler erfassten Temperatur steuern.

Die Schaltungsmittel umfassen hierzu bevorzugt mindestens einen Temperaturfühler, der über den Umweg einer Einflussnahme auf die elektrische Verschaltung der via der Schaltungsanordnung stromversorgten OLEDs zumindest in einer Anzahl von diskreten Stufen, welche der Zahl der verschiedenartigen elektrischen Verschaltungen entspricht, eine zur Aufrechterhaltung eines zum ordnungsgemäßen Betrieb der OLEDs erforderlichen, im Wesentlichen gleichbleibenden Stroms notwendige Versorgungsspannung der OLEDs des Leuchtmittels abhängig von einer von ihm erfassten Temperatur steuert.

Der Temperaturfühler weist hierzu ein einer von ihm erfassten Temperatur proportionales Ausgangssignal auf. Der Temperaturfühler dient zur Erfassung wenigstens einer Temperatur, beispielsweise einer Umgebungstemperatur mindestens einer OLED des Leuchtmittels oder der Temperatur mindestens einer OLED des Leuchtmittels.

Der Temperaturfühler ist hierbei mit einem Teil der Schaltungsanordnung verbunden, der via des Ausgangssignals des Temperatursensors gesteuert wird. Abhängig vom Ausgangssignal des Temperaturfühlers ist vorgesehen, die via der Schaltungsanordnung mit Strom versorgten OLEDs entsprechend ihrer durch die Segmentierung vorgegebenen Zuordnung zu Partien bei einer von dem Temperaturfühler erfassten Temperatur, welche unterhalb einer vorgegebenen Schwellentemperatur von beispielsweise 0°C liegt, parallel zueinander zu verschalten, wohingegen die OLEDs der unterhalb einer vorgegebenen Schwellentemperatur von beispielsweise 0 °C parallel verschalteten Partien bei einer von dem Temperaturfühler erfassten Temperatur, welche oberhalb einer vorgegebenen Schwellentemperatur von beispielsweise 0°C liegt, in Serie zueinander verschaltet werden.

Mit anderen Worten ist abhängig vom Ausgangssignal des Temperaturfühlers vorgesehen, die via der Schaltungsanordnung mit Strom versorgten, durch jeweils mindestens eine OLED gebildeten Partien der bei Betrieb des Leuchtmittels leuchtenden Fläche bei einer von dem Temperaturfühler erfassten Temperatur, welche unterhalb einer vorgegebenen Schwellentemperatur von beispielsweise 0°C liegt, parallel zueinander zu verschalten, wohingegen die unterhalb einer vorgegebenen Schwellentemperatur von beispielsweise 0°C parallel verschalteten, durch jeweils mindestens eine OLED gebildeten Partien der bei Betrieb des Leuchtmittels leuchtenden Fläche bei einer von dem Temperaturfühler erfassten Temperatur, welche oberhalb einer vorgegebenen Schwellentemperatur von beispielsweise 0°C liegt, in Serie zueinander verschaltet werden.

Dabei sind verschiedene, jeweils einem Temperaturbereich zugeordnete Zwischenstufen denkbar. So können beispielsweise bei vier durch jeweils mindestens eine OLED gebildeten Partien der bei Betrieb des Leuchtmittels leuchtenden Fläche in einem tiefsten Temperaturbereich, der unterhalb einer tiefsten Schwellentemperatur von beispielsweise -5°C liegt, alle vier Partien parallel geschaltet sein. Dadurch liegt an jeder Partie eine Versorgungsspannung in Höhe einer Gesamtspannung U an. In einem mittleren Temperaturbereich, der zwischen der tiefsten Schwellentemperatur von beispielsweise -5°C und einer höchsten Schwellentemperatur von beispielsweise +25°C liegt können jeweils zwei Partien zu einem Paar in Reihe geschaltet sein und die beiden Paare wiederum parallel zueinander geschaltet sein. Dadurch liegt an jeder Partie eine Versorgungsspannung in Höhe der halben Gesamtspannung U an, vorausgesetzt, die OLEDs aller Partien sind gleich ausgeführt. In einem höchsten Temperaturbereich, der oberhalb einer höchsten Schwellentemperatur von beispielsweise +25°C liegt, können alle vier Partien in Reihe geschaltet sein. Dadurch liegt an jeder Partie eine Versorgungsspannung in Höhe eines Viertels der Gesamtspannung U an, vorausgesetzt, die OLEDs aller Partien sind gleich ausgeführt.

Das beschriebene Beispiel mit vier Partien gilt unabhängig davon, ob die Partien durch jeweils eine oder mehrere OLEDs gebildet sind, und ob bei mehreren OLEDs je Partie die OLEDs innerhalb einer Partie parallel, oder in Reihe geschaltet sind.

Durch die Einflussnahme auf die Verschaltung der OLEDs der verschiedenen Partien bzw. der durch jeweils mindestens eine OLED gebildeten Partien der bei Betrieb des Leuchtmittels leuchtenden Fläche in Abhängigkeit von der vom Temperaturfühler erfassten Temperatur, nimmt die Schaltungsanordnung Einfluss auf die an den OLEDs anliegende Spannung in Abhängigkeit von der Temperatur mindestens einer OLED des Leuchtmittels.

Bei einem Ausgangssignal proportional einer vom Temperaturfühler erfassten Temperatur, die niedriger ist, als eine vorgegebene Schwellentemperatur, steuert das Ausgangssignal des Temperaturfühlers die Schaltungsanordnung derart, dass sie bei eingeschaltetem Leuchtmittel bzw. bei Betrieb des Leuchtmittels wenigstens eine durch wenigstens eine OLED gebildete erste Partie der bei Betrieb des Leuchtmittels leuchtenden Fläche parallel zu einer ebenfalls durch wenigstens eine OLED gebildete zweite Partie der bei Betrieb des Leuchtmittels leuchtenden Fläche schaltet.

Bei einem Ausgangssignal proportional einer vom Temperaturfühler erfassten Temperatur, die höher ist, als eine vorgegebene Schwellentemperatur, steuert das Ausgangssignal des Temperaturfühlers die Schaltungsanordnung derart, dass sie bei eingeschaltetem Leuchtmittel bzw. bei Betrieb des Leuchtmittels die unterhalb einer vorgegebenen Schwellentemperatur parallel geschalteten, durch jeweils mindestens eine OLED gebildeten Partien der bei Betrieb des Leuchtmittels leuchtenden Fläche dann in Serie schaltet.

Mit anderen Worten steuert das Ausgangssignal des Temperaturfühlers die Schaltungsanordnung derart, dass diese bei eingeschaltetem Leuchtmittel bzw. bei Betrieb des Leuchtmittels bei einem Ausgangssignal proportional einer vom Temperaturfühler erfassten Temperatur, die höher ist, als eine vorgegebene Schwellentemperatur, die unterhalb einer vorgegebenen Schwellentemperatur parallel zur zweiten Partie geschaltete, durch mindestens eine OLED gebildete erste Partie und die unterhalb einer vorgegebenen Schwellentemperatur parallel zur ersten Partie geschaltete, durch mindestens eine OLED gebildete zweite Partie dann zumindest in Serie schaltet.

Durch eine derartige Einflussnahme auf die elektrische Verschaltung der jeweils durch eine oder mehrere OLEDs gebildeten Partien, wodurch die an den OLEDs der Partien anliegende Spannung sich jeweils ändert, werden die entsprechend der Segmentierung Partien der leuchtenden Fläche bildenden OLEDs zumindest in diskreten Stufen mit einer zur Aufrechterhaltung eines zu deren ordnungsgemäßen Betriebs erforderlichen, im Wesentlichen gleich bleibenden Stroms notwendigen Spannung versorgt.

Die Umschaltung zwischen Serien- bzw. Reihenschaltung und Parallelschaltung mehrerer jeweils mindestens eine OLED umfassender Partien gebietet sich wegen des beispielsweise bei einem Einsatz in Kraftfahrzeugen begrenzten Niveaus der elektrischen Bordspannung. Auch kann hierdurch ohne das Vorliegen einer Begrenzung durch eine Bordspannung eine einfache temperaturabhängige Anpassung von an den OLEDs der Partien anliegenden Spannungen vorgenommen werden, die auch in Bereichen außerhalb von Kraftfahrzeuganwendungen relevant sein kann.

Indem bei einer unterhalb mindestens einer ersten vorgegebenen Schwellentemperatur von beispielsweise 0°C liegenden, von dem Temperaturfühler erfassten Temperatur zwei oder mehr oberhalb der Schwellentemperatur in Serie geschaltete, jeweils eine oder mehrere OLEDs umfassende Partien parallel verschaltet werden, erhöht sich beispielsweise in Verbindung mit einer Stromzufuhr von OLEDs in Kraftfahrzeuganwendungen die Spannung je OLED, wodurch der höhere Spannungsbedarf von OLEDs beispielsweise unterhalb einer Schwellentemperatur von beispielsweise 0°C ausgeglichen werden kann.

Hierdurch liegt bei einer von dem Temperaturfühler erfassten Temperatur unterhalb einer vorgegebenen Schwellentemperatur an den mindestens zwei jeweils eine oder mehrere OLEDs umfassende Partien eine höhere Spannung an, als bei einer von dem Temperaturfühler erfassten Temperatur oberhalb einer vorgegebenen Schwellentemperatur, wo die mindestens zwei jeweils eine oder mehrere OLEDs umfassende Partien in Serie geschaltet sind. Hierdurch werden die zu den wenigstens zwei Partien zugehörigen OLEDs unterhalb einer vorgegebenen Schwellentemperatur entsprechend ihres Spannungsbedarfs zur Aufrechterhaltung eines vorgegebenen Stroms mit einer höheren Spannung betrieben.

Denkbar sind wie bereits beispielhaft ausgeführt weitere Schwellentemperaturen, unter oder oberhalb denen gestufte Parallel- oder Serienschaltungen weiterer oder weniger jeweils mindestens eine OLED umfassender Partien stattfinden.

Vorteile ergeben sich unter Anderem durch eine Anpassung des Betriebs von elektrischen Verbrauchern, welche einen mit sich ändernder Umgebungs- und/oder Eigentemperatur veränderlichen Spannungsbedarf zur Aufrechterhaltung eines gleichbleibenden elektrischen Stroms aufweisen, wie dies beispielsweise bei OLEDs bei sinkenden Temperaturen und vor allem bei Temperaturen unterhalb 0°C der Fall ist, an einen breiten Temperaturbereich. Insbesondere bei Umgebungstemperaturen von unter 0°C kann dadurch der unvorteilhafte Strom-Spannungs-Verlauf von OLEDs zumindest in diskreten Stufen angepasst werden, wodurch diese im Kraftfahrzeugbereich einsetzbar werden.

Der Temperaturfühler kann im einfachsten Fall zumindest mit einem wenigstens einen Schalter umfassenden Teil der Schaltungsanordnung verbunden sein. Der wenigstens eine Schalter wird bei einem einer von dem Temperaturfühler erfassten Temperatur, die kleiner ist, als eine vorgegebene Schwellentemperatur von beispielsweise 0°C proportionalen Ausgangssignal von dem Temperaturfühler derart geschaltet, dass die jeweils mindestens eine OLED umfassenden Partien der Schaltungsanordnung bei Betrieb des Leuchtmittels in Paaren und/oder in Gruppen zu zwei, drei, vier oder mehr jeweils mindestens eine OLED umfassenden Partien parallel geschaltet sind. Der wenigstens eine Schalter wird bei einem einer von dem Temperaturfühler erfassten Temperatur, die größer ist, als eine vorgegebene Schwellentemperatur von beispielsweise 0°C proportionalen Ausgangssignal von dem Temperaturfühler derart geschaltet, dass die bei einem einer von dem Temperaturfühler erfassten Temperatur, die kleiner ist, als eine vorgegebene Schwellentemperatur von beispielsweise 0°C proportionalen Ausgangssignal bei Betrieb des Leuchtmittels in Paaren und/oder in Gruppen zu zwei, drei, vier oder mehr jeweils mindestens eine OLED umfassenden Partien parallel geschalteten jeweils mindestens eine OLED umfassenden Partien der Schaltungsanordnung dann paarweise und/oder in Gruppen zu zwei, drei, vier oder mehr jeweils mindestens eine OLED umfassenden Partien in Serie geschaltet sind.

Alternativ oder zusätzlich kann die Schaltungsanordnung einen Proportionalregler umfassen, der bei Betrieb des Leuchtmittels in Abhängigkeit von der vom Temperaturfühler erfassten Temperatur unterhalb einer vorgegebenen Schwellentemperatur um so mehr jeweils mindestens eine OLED umfassende Partien parallel schaltet, je tiefer die erfasste Temperatur unterhalb der vorgegebenen Schwellentemperatur liegt.

Die Schaltungsanordnung kann sowohl in der beschriebenen Ausführungsvariante einer Abschaltung einzelner, jeweils mindestens eine OLED umfassender Partien entsprechend der Segmentierung der leuchtenden Fläche des Leuchtmittels, als auch in der beschriebenen Ausführungsvariante einer veränderlichen elektrischen Verschaltung mindestens zweier, jeweils mindestens eine OLED umfassender Partien der leuchtenden Fläche des Leuchtmittels unter- und miteinander alternativ oder zusätzlich ein oder mehrere Proportional- und/oder Differential- und/oder Integralregler bzw. -glieder (P-, D-, I-Glieder) und/oder Schalter umfassen, um eine gewünschte Regelcharakteristik zu erhalten.

Zumindest ein Temperaturfühler der Schaltungsanordnung kann unmittelbar auf einer OLED, beispielsweise auf einem vorder- oder rückseitigen Glas- oder Kunststoffplättchen einer als Lichtquelle des Leuchtmittels vorgesehenen OLED angeordnet sein. Vorzugsweise handelt es sich hierbei um eine OLED einer Partie, die unterhalb einer vorgegebenen Schwellentemperatur bzw. oberhalb einer vorgegebenen Schwellenversorgungsspannung abgeschaltet wird.

Wichtig ist hierbei hervorzuheben, dass die durch die Schwellenwerte sowohl für die Temperatur, als auch für die Versorgungsspannung festgelegten Grenzen bei Überschreitung der jeweiligen Grenze aus unterschiedlichen Richtungen nicht identisch sein müssen. Dies kann beispielsweise sinnvoll sein, um eine stabile Regelung zu erhalten. Auch kann eine Schwellentemperatur oder können die Schwellentemperaturen andere Werte als die angegebenen aufweisen, beispielsweise um Ungenauigkeiten der Temperaturerfassung auszugleichen, wie sie beispielsweise durch Wärmeleitung zwischen Temperaturfühler und OLED entstehen können.

Ein zweiter Gegenstand der Erfindung betrifft eine Kraftfahrzeugleuchte mit wenigstens einem zur Erfüllung wenigstens einer Lichtfunktion der Kraftfahrzeugleuchte vorgesehenen, zuvor beschriebenen Leuchtmittel.

Wird eine entsprechend ausgestattete Kraftfahrzeugleuchte mit einem Leuchtmittel mit zwei oder mehr bei Betrieb des Leuchtmittels eine zur Erfüllung mindestens einer Lichtfunktion der Kraftfahrzeugleuchte vorgesehene leuchtende Fläche bildenden OLEDs als Lichtquellen:
- bei einer Umgebungstemperatur unterhalb einer vorgegebenen Schwellentemperatur und/oder
- bei einer Versorgungsspannung der OLEDs oberhalb einer vorgegebenen Schwellenversorgungsspannung
in Betrieb genommen, so findet durch die vermittels der Segmentierung der leuchtenden Fläche getrennte Stromzufuhr der jeweils eine oder mehr OLEDs umfassenden Partien der leuchtenden Fläche eine Anpassung der Helligkeit der leuchtenden Fläche statt, und/oder eine Anpassung einer zur Aufrechterhaltung eines für einen ordnungsgemäßen Betrieb der OLEDs des Leuchtmittels erforderlichen, im Wesentlichen gleichbleibenden Stroms notwendigen Versorgungsspannung.

Beispielsweise können die OLEDs wenigstens einer Partie der durch die bei Betrieb des Leuchtmittels durch dessen als Lichtquellen vorgesehenen OLEDs gebildeten, zur Erfüllung wenigstens einer Lichtfunktion der Kraftfahrzeugleuchte vorgesehenen leuchtenden Fläche bis auf eine verbleibende Partie abgeschaltet bleiben. Dabei ist denkbar, dass bis auf eine verbleibende Partie um so mehr Partien abgeschaltet werden, je weiter die vom Temperaturfühler erfasste Temperatur sinkt bzw. dass um so weniger Partien abgeschaltet sind, je höher die vom Temperaturfühler erfasste Temperatur steigt und/oder dass bis auf eine verbleibende Partie um so mehr Partien abgeschaltet werden, je höher die von den Versorgungsspannungsüberwachungsmitteln erfasste Versorgungsspannung steigt bzw. dass um so weniger Partien abgeschaltet sind, je weiter die von den Versorgungsspannungsüberwachungsmitteln erfasste Versorgungsspannung fällt. Oberhalb einer vorgegebenen Schwellentemperatur und/oder unterhalb einer vorgegebenen Schwellenversorgungsspannung findet damit ein Normalbetrieb aller als Lichtquellen des Leuchtmittels dienenden OLEDs statt.

Mindestens eine OLED des Leuchtmittels kann in eine Lichtscheibe und/oder eine Rückwand und/oder in ein anderes Bauteil der Kraftfahrzeugleuchte integriert sein.

Die Kraftfahrzeugleuchte kann einen von einer Lichtscheibe und einem Leuchtengehäuse zumindest zum Teil umschlossenen Leuchteninnenraum aufweisen. Mindestens ein zuvor beschriebenes Leuchtmittel kann in dem Leuchteninnenraum beherbergt sein.

Die Kraftfahrzeugleuchte ist bevorzugt als Heckleuchte ausgeführt. Alternativ kann die Kraftfahrzeugleuchte als in einem Außenrückblickspiegel untergebrachte Wiederholblinkleuchte ausgestaltet sein.

Die Kraftfahrzeugleuchte erlaubt die beschriebenen Vorteile des Leuchtmittels im Kraftfahrzeug- bzw. Automobilbereich zu nutzen.

Ein dritter Gegenstand der Erfindung betrifft ein Verfahren zum Betrieb zumindest eines Leuchtmittels mit mindestens zwei OLEDs als Lichtquellen und/oder einer mit wenigstens einem entsprechenden Leuchtmittel ausgestatteten Kraftfahrzeugleuchte.

Das Verfahren sieht vor, eine durch mehrere als Lichtquellen des zur Erfüllung einer oder mehrerer Lichtfunktionen vorgesehenen Leuchtmittels dienenden OLEDs gebildete, bei Betrieb des Leuchtmittels leuchtende Fläche in zwei oder mehr Partien zu segmentieren. Jede Partie umfasst dabei mindestens eine OLED.

Die Segmentierung erfolgt vorzugsweise gleichmäßig über die bei Betrieb des Leuchtmittels leuchtende Fläche hinweg.

Das Verfahren sieht ferner vor, die Stromzufuhr zumindest der OLEDs unterschiedlicher Partien jeweils separat zu schalten, wobei zur Kompensation einer erhöhten Helligkeit der OLEDs der leuchtenden Fläche insbesondere bei tiefen Temperaturen von beispielsweise unter 0°C und/oder bei zur Aufrechterhaltung eines zum ordnungsgemäßen Betrieb der OLEDs erforderlichen, im Wesentlichen konstanten Stroms notwendigen erhöhten Versorgungsspannung vorgesehen ist, bis auf mindestens eine verbleibende Partie wenigstens eine Partie von der Stromzufuhr zu trennen und/oder zur Sicherstellung einer zur Aufrechterhaltung eines zum ordnungsgemäßen Betrieb der OLEDs erforderlichen, im Wesentlichen konstanten Stroms notwendigen erhöhten Versorgungsspannung die Verschaltung der für die Stromzufuhr vorgesehenen Stromversorgungen der einzelnen durch jeweils mindestens eine OLED gebildeten Partien der bei Betrieb des Leuchtmittels leuchtenden Fläche zu ändern.

Das Verfahren sieht ferner vor, dass die beschriebenen Maßnahmen abhängig von einem Ergebnis eines Vergleichs:
- mindestens einer Temperatur, beispielsweise der Temperatur einer oder mehrerer OLEDs und/oder einer Umgebungstemperatur einer oder mehrerer OLEDs, beispielsweise der Temperatur in einem Leuchteninnenraum, mit wenigstens einer Schwellentemperatur und/oder
- mindestens einer zur Stromversorgung einer oder mehrerer OLEDs vorgesehenen Versorgungsspannung mit wenigstens einer Schwellenversorgungsspannung
getroffen werden.

Das Verfahren kann einzelne Merkmale oder eine beliebige Kombination von zwei oder mehreren Merkmalen eines zuvor beschriebenen Leuchtmittels oder einer mit mindestens einem solchen Leuchtmittel ausgestatteten Kraftfahrzeugleuchte nebst einer oder mehrerer der beschriebenen und/oder getroffenen Maßnahmen zur Schaltung dessen als OLED ausgeführter Lichtquellen aufweisen.

Ebenso wie die Kraftfahrzeugleuchte es erlaubt, die Vorteile des Leuchtmittels zu nutzen, erlaubt auch das Verfahren, sämtliche Vorteile des Leuchtmittels nutzbar zu machen.

Die Erfindung ermöglicht eine Kompensation des erhöhten Lichtstroms bzw. der erhöhten Helligkeit von OLEDs in einem Temperaturbereich, bei dem OLEDs zur Aufrechterhaltung des zu deren ordnungsgemäßen Betriebs erforderlichen Stroms einen im Vergleich zu LEDs ansteigenden Versorgungsspannungsbedarf aufweisen. Hierdurch stellt die Erfindung die Einhaltung auch solcher vorgegebener Lichtverteilungen bei der Verwendung von OLEDs als Lichtquellen sicher, bei denen in einem oder mehreren bestimmten, vorgegebenen Raumwinkelbereiche kein oder nur begrenzt Licht abgestrahlt werden darf, beispielsweise um eine Blendwirkung anderer Verkehrsteilnehmer auszuschließen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

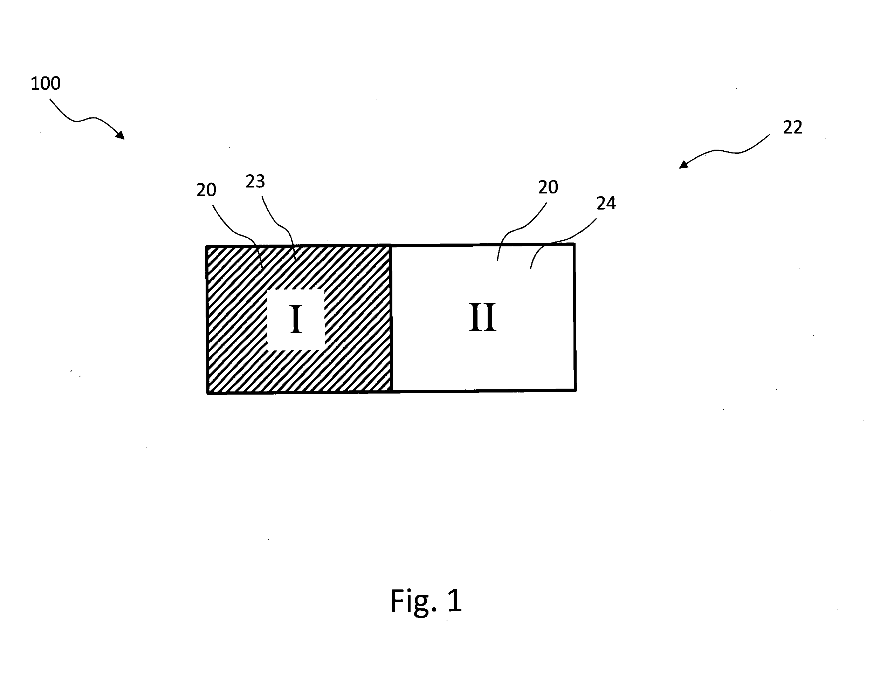

- Fig. 1: eine durch zwei als Lichtquellen eines Leuchtmittels vorgesehene OLEDs gebildete leuchtende Fläche, welche gemäß eines ersten Ausführungsbeispiels einer Segmentierung in zwei Partien segmentiert ist, in einer Draufsicht.

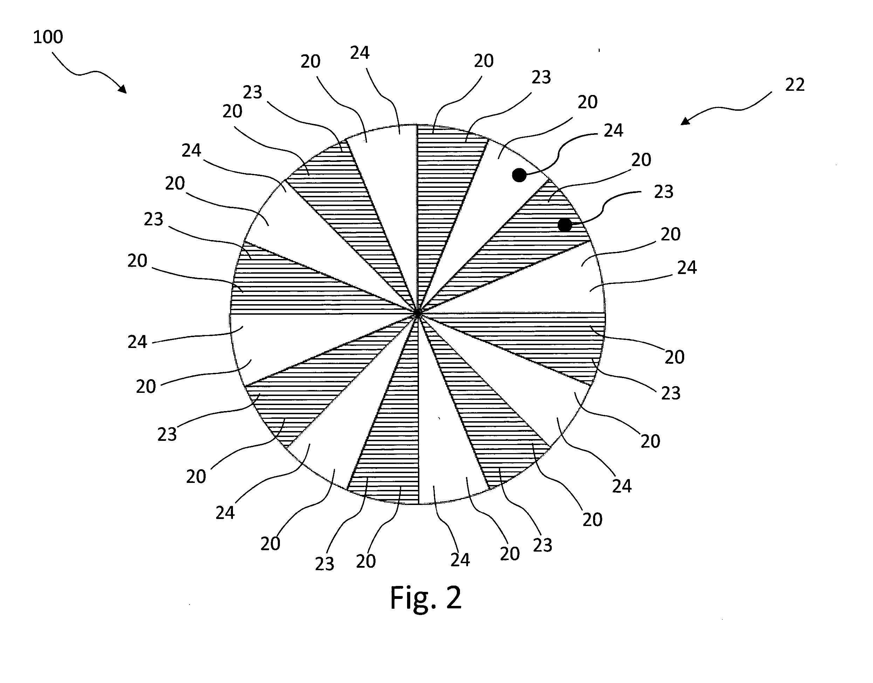

- Fig. 2: eine durch mehrere als Lichtquellen eines Leuchtmittels vorgesehene OLEDs gebildete leuchtende Fläche, welche gemäß eines zweiten Ausführungsbeispiels einer Segmentierung in zwei Partien segmentiert ist, in einer Draufsicht.

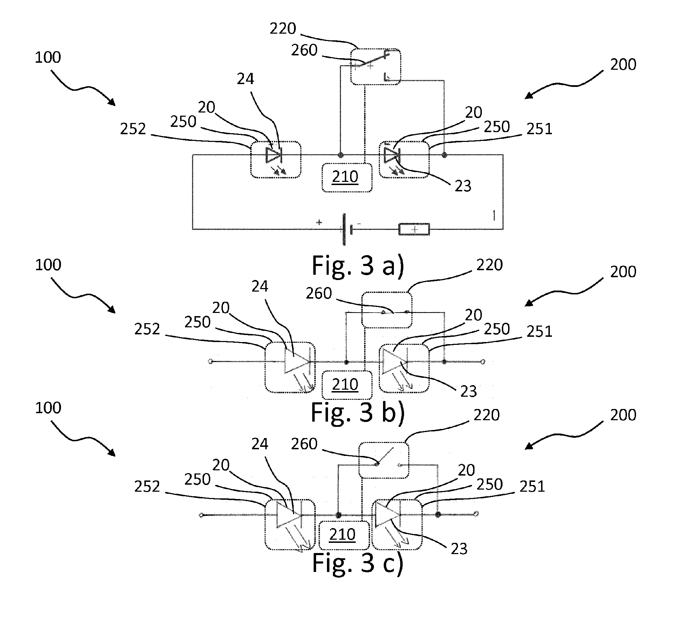

- Fig. 3: ein Schaltbild eines Leuchtmittels mit mindestens zwei bei Betrieb des Leuchtmittels eine in Partien segmentierte leuchtende Fläche bildenden OLEDs als Lichtquellen und einer Schaltungsanordnung zur Stromversorgung der OLEDs mit mindestens einem Temperaturfühler in Fig. 3a) sowie ein Detail der Schaltungsanordnung des Leuchtmittels aus Fig. 3a) unterhalb einer Schwellentemperatur in Fig. 3b) und ein Detail der Schaltungsanordnung des Leuchtmittels aus Fig. 3a) oberhalb einer Schwellentemperatur in Fig. 3c).

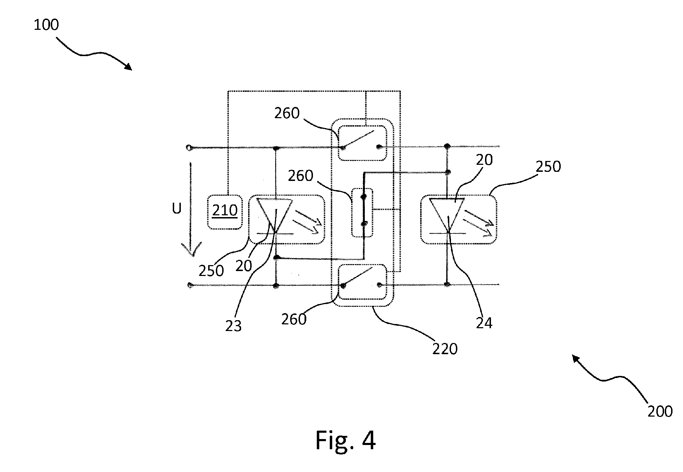

- Fig. 4: ein Schaltbild eines Leuchtmittels mit mindestens zwei bei Betrieb des Leuchtmittels eine in Partien segmentierte leuchtende Fläche bildenden OLEDs als Lichtquellen und einer Schaltungsanordnung zur Stromversorgung der OLEDs mit wenigstens einem Temperaturfühler und mindestens zwei getrennten Stromversorgungen für jeweils eine mindestens eine OLED umfassende Partie.

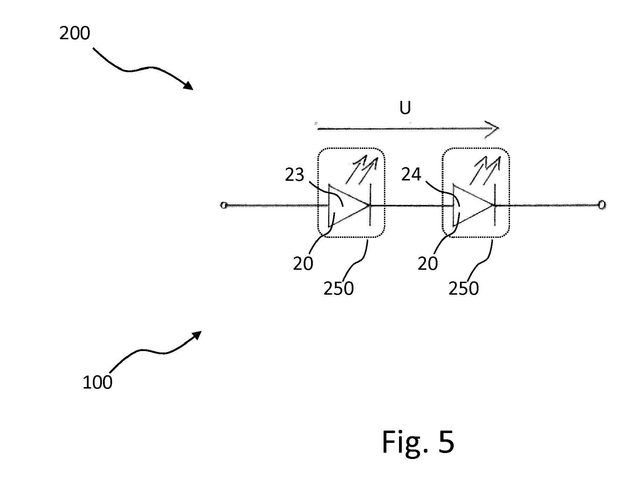

- Fig. 5: ein Schaltbild einer elektrischen Verschaltung zweier Stromversorgungen für jeweils eine mindestens eine OLED umfassende Partie in Serie einer Schaltungsanordnung aus Fig. 4, bei einem Ausgangssignal eines Temperatursensors proportional einer Temperatur oberhalb einer vorgegebenen Schwellentemperatur.

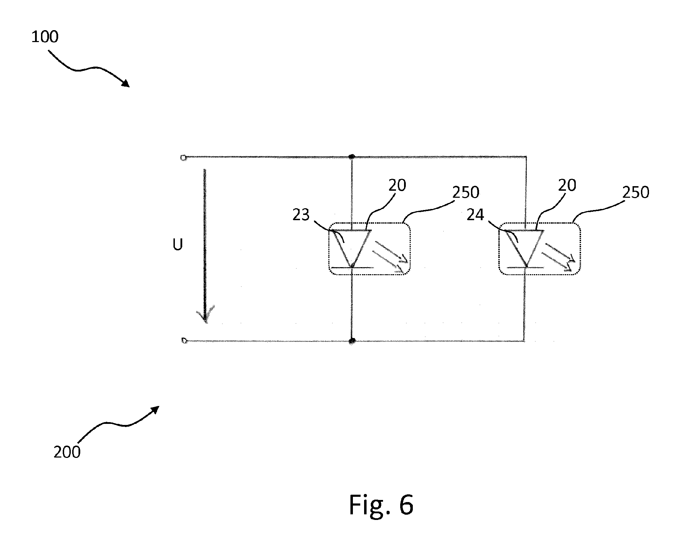

- Fig. 6: ein Schaltbild einer elektrischen Verschaltung zweier Stromversorgungen für jeweils eine mindestens eine OLED umfassende Partie parallel zueinander einer Schaltungsanordnung aus Fig. 4, bei einem Ausgangssignal eines Temperatursensors proportional einer Temperatur unterhalb einer vorgegebenen Schwellentemperatur.

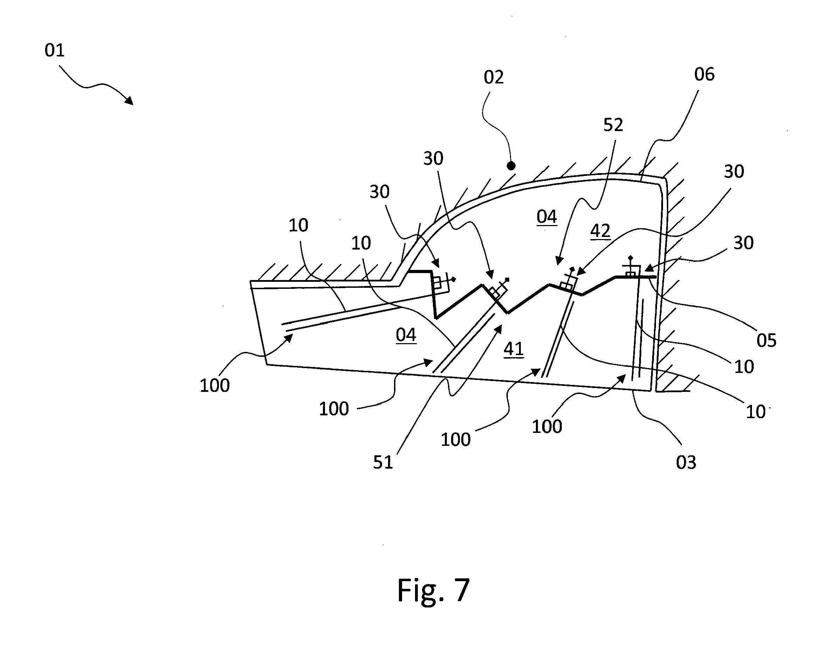

- Fig. 7: eine Kraftfahrzeugleuchte mit einem von einem Leuchtengehäuse und einer Lichtscheibe zumindest zum Teil umschlossenen Leuchteninnenraum mit einer darin beherbergten Blende, welche den Leuchteninnenraum in einen durch die Lichtscheibe hindurch gesehen vor der Blende liegenden und durch die Lichtscheibe hindurch einsehbaren, ersten Bereich und in einen durch die Lichtscheibe hindurch gesehen hinter der Blende liegenden und durch die Lichtscheibe hindurch nicht einsehbaren, zweiten Bereich einteilt, mit einer Mehrfachanordnung mehrerer Leuchtmittel mit jeweils mindestens zwei eine leuchtende Fläche des Leuchtmittels bildenden OLEDs als Lichtquellen und einer Schaltungsanordnung zum Betrieb der OLEDs mit jeweils mindestens einem Temperaturfühler, welche jeweils mit einem mindestens eine OLED und den Temperaturfühler haltenden Träger ausgestattet sind, deren Träger vom zweiten Bereich aus in den ersten Bereich hinein durch die Blende hindurchragen, in einem Querschnitt.

Ein in Fig. 1 bis Fig. 6 ganz oder in Teilen dargestelltes, beispielsweise zur Erfüllung mindestens einer Lichtfunktion einer in Fig. 7 dargestellten und beispielsweise als Heckleuchte oder als in einem Außenrückblickspiegel untergebrachte Wiederholblinkleuchte ausgeführten Kraftfahrzeugleuchte 01 vorgesehenes Leuchtmittel 100 umfasst mindestens zwei OLEDs 20 als Lichtquellen.

Die OLEDs 20 bilden bei Betrieb des Leuchtmittels 100 eine leuchtende Fläche 22 zur Erfüllung mindestens einer Lichtfunktion. Die leuchtende Fläche 22 ist in mindestens zwei Partien 23, 24 zu jeweils wenigstens einer OLED 20 segmentiert. Wenigstens eine erste OLED 20 ist Teil einer ersten Partie 23 und wenigstens eine zweite OLED 20 ist Teil einer zweiten Partie 24. Wenn die leuchtende Fläche 22 in drei oder mehr Partien segmentiert ist, ist zumindest eine dritte OLED 20 Teil einer dritten Partie, und so weiter.

Die Segmentierung sieht eine gleichmäßige, regelmäßige Verteilung der OLEDs 20 der verschiedenen Partien 23, 24 über die leuchtende Fläche 22 hinweg vor.

Das Leuchtmittel 100 umfasst eine Schaltungsanordnung 200 mit getrennten Stromversorgungen 250 wenigstens für die OLEDs 20 unterschiedlicher Partien 23, 24. Dabei umfasst die Schaltungsanordnung eine erste Stromversorgung 251 für eine erste, mindestens eine OLED 20 umfassende bzw. durch mindestens eine OLED 20 gebildete Partie 23 und eine zweite Stromversorgung 252 für eine erste, mindestens eine OLED 20 umfassende bzw. durch mindestens eine OLED 20 gebildete Partie 24.

Die getrennten Stromversorgungen 250, 251, 252 für OLEDs 20 unterschiedlicher Partien 23, 24 der bei Betrieb des Leuchtmittels 100 leuchtenden Fläche 22 erlauben die OLED 20 bzw. die OLEDs 20 einer ersten Partie 23 der leuchtenden Fläche 22 bei einem Betrieb des Leuchtmittels 100 beispielsweise unterhalb einer vorgegebenen Schwellentemperatur und/oder oberhalb einer vorgegebenen Schwellenversorgungsspannung, welche zur Aufrechterhaltung eines zum ordnungsgemäßen Betrieb der OLEDs 20 des Leuchtmittels 100 erforderlichen, im Wesentlichen konstanten Stroms notwendig ist abzuschalten und/oder zu überbrücken und/oder von der Stromversorgung zu trennen, ohne die OLED 20 bzw. die OLEDs 20 einer zweiten, verbleibenden Partie 24 ebenfalls abschalten und/oder von der Stromversorgung trennen zu müssen, sondern weiterhin mit der Stromversorgung verbunden zu lassen.

Alternativ oder zusätzlich erlaubt die getrennte Stromversorgungen 250, 251, 252 für OLEDs 20 unterschiedlicher Partien 23, 24 der bei Betrieb des Leuchtmittels 100 leuchtenden Fläche 22 die elektrische Verschaltung der OLEDs 20 der verschiedenen Partien 23, 24 der leuchtenden Fläche 22 während des Betriebs des Leuchtmittels 100 beispielsweise abhängig von mindestens einer vorgegebenen Schwellentemperatur und/oder mindestens einer vorgegebenen Schwellenversorgungsspannung, welche zur Aufrechterhaltung eines zum ordnungsgemäßen Betrieb der OLEDs 20 des Leuchtmittels 100 erforderlichen, im Wesentlichen konstanten Stroms notwendig ist, zu verändern.

Wenn wie in Fig. 2 dargestellt zwei oder mehrere OLEDs 20 eine Partie 23, 24 der segmentierten leuchtenden Fläche 22 bilden, sieht die gemäß der Segmentierung gleichmäßige, regelmäßige Verteilung der OLEDs 20 bevorzugt vor, dass sich innerhalb der leuchtenden Fläche 22 zwischen zwei OLEDs 20 einer Partie 23 zumindest je eine OLED 20 der mindestens einen verbleibenden Partie 24 befindet.

Sind zwei oder mehr OLEDs 20 je Partie 23, 24 vorgesehen, können die OLEDs 20 jeder Partie 23, 24 parallel und/oder in Serie (in Reihe) elektrisch verschaltet sein.

Die Schaltungsanordnung 200 kann Schaltungsmittel 220 umfassen, welche in Abhängigkeit von der zur Aufrechterhaltung eines bei eingeschaltetem Leuchtmittel zum ordnungsgemäßen Betrieb dessen OLEDs 20 erforderlichen, im Wesentlichen gleichbleibenden Stroms notwendigen Spannung die Partien 23, 24 der leuchtenden Fläche 22 bildenden OLEDs 20 segmentweise zu- und abschaltet.

Die Schaltungsmittel 220 veranlassen hierbei eine Abschaltung mindestens einer beispielsweise durch jeweils einen elektrischen Anschluss gebildeten Stromversorgung 250, 251 für die wenigstens eine, eine Partie 23 der bei Betrieb des Leuchtmittels 100 leuchtenden Fläche 22 bildende OLED 20, wobei zumindest eine Stromversorgung 250, 252 für wenigstens eine mindestens eine OLED 20 umfassende, verbleibende Partie 24 der bei Betrieb des Leuchtmittels 100 leuchtenden Fläche 22 weiterhin mit der Stromzufuhr verbunden bleibt.

Die getrennten, jeweils durch beispielsweise einen elektrischen Anschluss gebildeten Stromversorgungen 250, 251, 252 für OLEDs 20 unterschiedlicher Partien 23, 24 der bei Betrieb des Leuchtmittels 100 leuchtenden Fläche 22 erlauben die OLED 20 bzw. die OLEDs 20 einer ersten Partie 23 der leuchtenden Fläche 22 bei einem Betrieb des Leuchtmittels 100 beispielsweise unterhalb einer vorgegebenen Schwellentemperatur und/oder oberhalb einer vorgegebenen Schwellenversorgungsspannung, welche zur Aufrechterhaltung eines zum ordnungsgemäßen Betrieb der OLEDs 20 des Leuchtmittels 100 erforderlichen, im Wesentlichen konstanten Stroms notwendig ist, abzuschalten und/oder zu überbrücken und/oder von der Stromzufuhr zu trennen, ohne die OLED 20 bzw. die OLEDs 20 einer zweiten, verbleibenden Partie 24 ebenfalls abzuschalten und/oder von der Stromzufuhr zu trennen, sondern weiterhin mit der Stromzufuhr verbunden zu lassen.

Wenigstens eine beispielsweise durch einen elektrischen Anschluss gebildete Stromversorgung 250, 251 kann hierbei wie in Fig. 3 dargestellt von der Stromzufuhr getrennt werden, indem die Stromversorgung 250, 251 etwa durch Kurzschließen überbrückt wird.

Erfolgt die Abschaltung einzelner jeweils mindestens eine OLED 20 umfassender Partien 23 durch eine Überbrückung der mindestens einen OLED 20 der entsprechenden Partie 23, und ist eine oder sind mehrere verbleibende, jeweils mindestens eine OLED 20 umfassende Partien 24 in Reihe zu der überbrückten bzw. überbrückbaren Partie 23 angeordnet, so kann durch die Abschaltung gleichzeitig eine Anpassung der zur Aufrechterhaltung eines zum ordnungsgemäßen Betrieb von OLEDs 20 der mindestens einen verbleibenden Partie 24 erforderlichen, im Wesentlichen gleichbleibenden Stroms notwendigen Spannung erfolgen, weil durch die Überbrückung einer mindestens eine OLED 20 umfassenden Partie 23 in einer Reihenschaltung mehrerer jeweils mindestens eine OLED 20 umfassender Partien 23, 24 an der überbrückten, mindestens eine OLED 20 umfassenden Partie 23 kein wesentlicher Spannungsabfall auftritt, wodurch sich die anliegende Spannung auf die mindestens eine verbleibende, mindestens eine OLED 20 umfassende Partie 24 zwei oder mehrerer in Reihe geschalteter, jeweils mindestens eine OLED 20 umfassender Partien 23, 24 verteilt.

Eine Schaltungsanordnung 200 eines entsprechenden Leuchtmittels 100 ist in Fig. 3 dargestellt. Die Schaltungsanordnung 200 umfasst einen Temperaturfühler 210 und Schaltungsmittel 220, welche die Schaltungsanordnung 200 abhängig von einer von dem Temperaturfühler 210 erfassten Temperatur im Vergleich zu einer vorgegebenen Schwellentemperatur zu einer Abschaltung mindestens einer beispielsweise durch jeweils einen elektrischen Anschluss gebildeten Stromversorgung 250, 251 für die wenigstens eine, eine Partie 23 der bei Betrieb des Leuchtmittels 100 leuchtenden Fläche 22 bildende OLED 20 veranlassen, wobei zumindest eine Stromversorgung 250, 252 für wenigstens eine mindestens eine OLED 20 umfassende, verbleibende Partie 24 der bei Betrieb des Leuchtmittels 100 leuchtenden Fläche 22 weiterhin mit Strom versorgt bleibt.

Der Temperaturfühler 210 weist ein einer von ihm erfassten Temperatur proportionales Ausgangssignal auf und dient einer Erfassung wenigstens einer Temperatur, beispielsweise einer Umgebungstemperatur mindestens einer OLED des Leuchtmittels oder der Temperatur mindestens einer OLED des Leuchtmittels.

Die Schaltungsmittel 220 sind mit der Schaltungsanordnung 200 elektrisch verbunden und/oder Teil der Schaltungsanordnung 200 und/oder von der Schaltungsanordnung 200 umfasst und/oder umfassen zumindest zum Teil die Schaltungsanordnung 200.

Ein Ausgangssignal des Temperaturfühlers 210 steuert die Schaltungsmittel 220 derart, dass die Schaltungsanordnung 200 bei eingeschaltetem Leuchtmittel 100 bzw. bei Betrieb des Leuchtmittels 100:
- bei einem Ausgangssignal proportional einer vom Temperaturfühler 210 erfassten Temperatur, die niedriger ist, als eine vorgegebene Schwellentemperatur von beispielsweise 0°C, wenigstens eine beispielsweise durch einen elektrischen Anschluss gebildete Stromversorgung 251 für eine mindestens eine OLED 20 umfassende erste Partie 23 von der Stromversorgung trennt und dadurch nicht mit Strom versorgt und die mindestens eine OLED 20 der an die wenigstens eine Stromversorgung 251 angeschlossenen ersten Partie 23 ausgeschaltet ist oder bleibt, wobei zumindest eine verbleibende, ebenfalls beispielsweise durch einen elektrischen Anschluss gebildete Stromversorgung 252 weiterhin mit Strom versorgt ist oder bleibt und somit die mindestens eine OLED 20 der an die zumindest eine verbleibende Stromversorgung 252 angeschlossene zweite Partie 24 eingeschaltet ist, bleibt oder wird, wie in Fig. 3b) dargestellt, und
- bei einem Ausgangssignal proportional einer vom Temperaturfühler 210 erfassten Temperatur, die höher ist, als eine vorgegebene Schwellentemperatur von beispielsweise 0°C, sämtliche durch beispielsweise jeweils einen elektrischen Anschluss für jeweils eine Partie 23, 24 gebildeten Stromversorgungen 250 und dadurch alle an den mindestens zwei Stromversorgungen 250 angeschlossenen OLEDs 20 der verschiedenen Partien 23, 24 mit Strom versorgt werden, wie in Fig. 3c) dargestellt.

Wichtig ist in diesem Zusammenhang hervorzuheben, dass eine Trennung von der Stromversorgung im Sinne der Erfindung auch dann vorliegt, wenn weiterhin ein Leckstrom durch mindestens eine OLED fließt, welcher jedoch nicht ausreicht, eine Lichtemission einer OLED zu erzeugen.

Wichtig ist an dieser Stelle nochmals hervorzuheben, dass der Fall einer erfassten Temperatur, welche gleich einer vorgegebenen Schwellentemperatur obgleich nicht ausdrücklich erwähnt auch Berücksichtigung findet oder auch Berücksichtigung finden kann. Dieser Fall ist jedoch in den bisher und auch nachfolgend noch beschriebenen Ausführungsbeispielen nicht explizit erwähnt, da es im Rahmen der Erfindung generell möglich ist, dass ein oberhalb an eine Schwellentemperatur angrenzender Temperaturbereich die Schwellentemperatur umfasst, oder dass ein unterhalb einer Schwellentemperatur an diese angrenzender Temperaturbereich die Schwellentemperatur umfasst.

Generell gilt für die gesamte vorliegende Beschreibung nebst Ansprüchen, dass Unter- und/oder Überschreitungen einer Schwellentemperatur je nach erwünschter Charakteristik die Schwellentemperatur einschließen können, so dass bereits bei Erreichen einer Schwellentemperatur im Sinne einer Gleichheit der erfassten Temperatur mit einer Schwellentemperatur eine Zu- und/oder Abschaltung vorgenommen wird oderwie nachfolgend noch beschrieben - eine elektrische Verschaltung verändert wird, je nachdem von welcher Seite - höher oder niedriger - sich die erfasste Temperatur einer Schwellentemperatur annähert.

Durch die Einflussnahme auf die Stromzufuhr wenigstens einer der jeweils mindestens eine OLED 20 umfassenden Partien 23, 24 in Abhängigkeit von der vom Temperaturfühler 210 erfassten Temperatur nehmen die Schaltungsmittel 220 und damit die Schaltungsanordnung 200 Einfluss auf die Versorgungsspannung der OLEDs 20 des Leuchtmittels 100 und sorgen durch die Abschaltung einzelner Stromversorgungen 251 vermittels Überbrückung zu Zwecken einer Steigerung der Versorgungsspannung damit gleichzeitig für eine gleichmäßige Lichtabstrahlung des Leuchtmittels 100.

Der Temperaturfühler 210 kann hierbei zumindest mit einer wenigstens einen Schalter 260 umfassenden Partie der Schaltungsmittel 220 verbunden sein. Der Schalter 260 wird bei einem einer von dem Temperaturfühler 210 erfassten Temperatur, die kleiner ist, als eine vorgegebene Schwellentemperatur von beispielsweise 0°C proportionalen Ausgangssignal des Temperaturfühlers 210 derart geschaltet, dass bis auf wenigstens eine verbleibende Stromversorgung 252 des Leuchtmittels 100 mindestens eine Stromversorgung 251 des Leuchtmittels 100, beispielsweise die Hälfte aller Stromversorgungen 250 des Leuchtmittels 100 nebst der an diesen angeschlossenen einen oder mehreren, eine Partie 23, 24 der leuchtenden Fläche 22 des Leuchtmittels 100 bildenden OLEDs 20, bei Betrieb des Leuchtmittels 100 von der Stromzufuhr durch die Schaltungsanordnung 200 getrennt ist und dadurch die wenigstens eine an diese mindestens eine Stromversorgung 251 angeschlossene Partie 23 nicht betrieben wird.

Bei einem einer von dem Temperaturfühler 210 erfassten Temperatur, die größer ist, als eine vorgegebene Schwellentemperatur von beispielsweise 0°C proportionalen Ausgangssignal wird der Schalter 260 von dem Temperaturfühler 210 derart geschaltet, dass alle Stromversorgungen 250 des Leuchtmittels und damit alle OLEDs 20 der verschiedenen Partien 23, 24 der leuchtenden Fläche 22 des Leuchtmittels 100 bei dessen Betrieb mit der Stromzufuhr durch die Schaltungsanordnung 200 verbunden sind und dadurch betrieben werden.

Die Schaltungsanordnung 200 und/oder die Schaltungsmittel 220 können ein oder mehrere Proportional- und/oder Differential- und/oder Integralglieder, so genannte P-, D-, I-Glieder und/oder Schalter 260 umfassen, um eine gewünschte Regelcharakteristik zu erhalten.

Anstelle beispielsweise nur einer Schwellentemperatur, oberhalb derer alle jeweils mindestens eine OLED 20 umfassenden Partien 23, 24 der leuchtenden Fläche 22 des Leuchtmittels 100 betrieben werden und unterhalb derer nur ein Teil der jeweils mindestens eine OLED 20 umfassenden Partien 23, 24 der leuchtenden Fläche 22 des Leuchtmittels 100 betrieben werden, können mehrere vorgegebene Schwellentemperaturen vorgesehen sein, beispielsweise in Anhängigkeit von der Anzahl der vorhandenen Stromversorgungen 250. Bei einer niedrigsten Schwellentemperatur ist dabei beispielsweise genau eine Stromversorgung 250, 252 mit der Stromzufuhr verbunden, wodurch die mindestens eine OLED 20 der vermittels dieser Stromversorgung 250, 252 mit der Stromzufuhr verbundenen Partie 24 betrieben wird. Bei einer höchsten Schwellentemperatur sind alle Stromversorgungen 250, 251, 252 mit der Stromzufuhr verbunden und dadurch alle an die Stromversorgungen 250 angeschlossenen OLEDs 20 aller Partien 23, 24 der leuchtenden Fläche 22 des Leuchtmittels 100 betrieben.

Denkbar sind weitere Schwellentemperaturen, unter oder oberhalb denen gestufte Abschaltungen weiterer oder weniger Stromversorgungen 250 stattfinden.

Wichtig ist hervorzuheben, dass die durch Schwellentemperaturen festgelegten Grenzen bei Überschreitung der jeweiligen Grenze aus unterschiedlichen Richtungen nicht identisch sein müssen. Auch kann eine Schwellentemperatur oder können die Schwellentemperaturen andere Werte als die angegebenen aufweisen, beispielsweise um Ungenauigkeiten der Temperaturerfassung auszugleichen, wie sie beispielsweise durch Wärmeleitung zwischen Temperaturfühler 210 und OLED 20 bzw. OLEDs 20 entstehen können.

Wird beispielsweise die zur Aufrechterhaltung eines zu einem ordnungsgemäßen Betrieb von OLEDs erforderlichen, im Wesentlichen konstanten Stroms notwendige Versorgungsspannung beispielsweise temperaturabhängig extern geregelt, etwa bei einem Einsatz in Kraftfahrzeugleuchten seitens eines kraftfahrzeugeigenen Steuergeräts, so ist alternativ zu einer Anpassung einer Versorgungsspannung beispielsweise durch Überbrückung einer Stromversorgung 251 mehrerer in Reihe geschalteter Stromversorgungen 250 denkbar, zur Einhaltung einer im Wesentlichen gleichbleibenden Lichtabstrahlung der leuchtenden Fläche 22 die Zu- und Abschaltung von Stromversorgungen 250 und via dieser mit Strom versorgter, eine oder mehrere OLEDs 20 umfassender Partien 23, 24 der leuchtenden Fläche 22 des Leuchtmittels 100 vermittels einer Überwachung der zur Aufrechterhaltung eines zum ordnungsgemäßen Betrieb von OLEDs 20 erforderlichen, im Wesentlichen konstanten Stroms vorgesehenen Versorgungsspannung zu steuern. Hierzu können die Schaltungsmittel 220 Versorgungsspannungsüberwachungsmittel mit einem mindestens einer von ihnen erfassten Versorgungsspannung proportionalen Ausgangssignal zur Erfassung der Höhe einer Versorgungsspannung der OLEDs 20 des Leuchtmittels 100 umfassen. Dies kann beispielsweise sinnvoll sein, wird die Versorgungsspannung der OLEDs 20 von außerhalb des Leuchtmittels 100, beispielsweise temperaturabhängig geregelt.

Alternativ oder zusätzlich kann die Schaltungsanordnung 200 des Leuchtmittels 100 Schaltungsmittel 220 umfassen, welche wie in Fig. 4, Fig. 5 und Fig. 6 dargestellt die elektrische Verschaltung der via der Schaltungsanordnung 220 bei Betrieb des Leuchtmittels 100 mit Strom versorgten und durch jeweils mindestens eine OLED 20 gebildeten Partien 23, 24 der leuchtenden Fläche 22 des Leuchtmittels 100 in Abhängigkeit von einer von mindestens einem Temperaturfühler 210 erfassten Temperatur steuern.

Die Schaltungsmittel 220 können auch hier mit der Schaltungsanordnung 200 elektrisch verbunden und/oder Teil der Schaltungsanordnung 200 und/oder von der Schaltungsanordnung 200 umfasst sein und/oder können zumindest zum Teil die Schaltungsanordnung 200 umfassen.

Das Ausgangssignal des Temperaturfühlers 210 steuert die Schaltungsmittel 220 derart, dass die Schaltungsanordnung 200 bei eingeschaltetem Leuchtmittel 100 bzw. bei Betrieb des Leuchtmittels 100:
- bei einem Ausgangssignal proportional einer vom Temperaturfühler 210 erfassten Temperatur, die höher ist, als eine vorgegebene Schwellentemperatur, zumindest zwei der beispielsweise durch elektrische Anschlüsse für die OLEDs 20 der jeweiligen Partien 23, 24 der leuchtenden Fläche 22 des Leuchtmittels 100 gebildeten Stromversorgungen 250 der Schaltungsanordnung 200 in Serie zueinander verschaltet, und
- bei einem Ausgangssignal proportional einer vom Temperaturfühler 210 erfassten Temperatur, die niedriger ist, als eine vorgegebene Schwellentemperatur, die oberhalb einer vorgegebenen Schwellentemperatur in Serie zueinander verschalteten Stromversorgungen 250 parallel zueinander verschaltet.

Durch die Einflussnahme auf die elektrische Verschaltung der die OLEDs 20 der verschiedenen Partien 23, 24 der leuchtenden Fläche 22 des Leuchtmittels 100 bei dessen Betrieb mit Strom versorgenden Stromversorgungen 250 der Schaltungsanordnung 200 in Abhängigkeit von der vom Temperaturfühler 210 erfassten Temperatur nehmen die Schaltungsmittel 220 und damit die Schaltungsanordnung 200 Einfluss auf die an den Stromversorgungen 250 anliegende Spannung U.

Sind mehrere Stromversorgungen 250 für jeweils eine mindestens eine OLED 20 umfassende Partie 23, 24 der leuchtenden Fläche 22 des Leuchtmittels 100 wie in Fig. 5 stark vereinfacht dargestellt in Serie (in Reihe) geschaltet, so teilen sich die Stromversorgungen 250 die anliegende Gesamtspannung U entsprechend ihren elektrischen Widerständen. Sind mehrere Stromversorgungen 250 wie in Fig. 6 stark vereinfacht dargestellt parallel geschaltet, so liegt an jeder der Stromversorgungen 250 die Gesamtspannung U in voller Höhe an.

Damit kann bei einem Leuchtmittel 100 mit mindestens zwei OLEDs 20 als Lichtquellen, die gemeinsam eine bei Betrieb des Leuchtmittels 100 leuchtende Fläche 22 bilden, die in mindestens zwei Partien 23, 24 mit getrennter Stromzufuhr unterteilt ist, mit Hilfe einer Schaltungsanordnung 200, die auch Temperaturfühler 210 beinhaltet, die elektrische Verschaltung zwischen den OLEDs 20 der verschiedenen Partien 23, 24 verändert werden. Hierbei wird abhängig von der Temperatur die Verschaltung der OLEDs 20 der verschiedenen Partien 23, 24 von Serienverschaltung zu Parallelverschaltung (oder andersherum) geändert.

Dies ist nötig, da bei tiefen Temperaturen von beispielsweise minus 40 °C die OLEDs 20 einen signifikant höheren Versorgungsspannungsbedarf zur Aufrechterhaltung des zu deren Betrieb erforderlichen, weitgehend konstanten Stroms aufweisen, als dies beispielsweise bei 0 °C oder darüber der Fall ist.

Durch die Selbsterwärmung der OLEDs 20 im Betrieb wärmen sich diese und wärmt sich damit deren Umgebung, wie etwa ein von einem Leuchtengehäuse 02 und einer Lichtscheibe 03 zumindest zum Teil umgebener Leuchteninnenraum 04 einer Kraftfahrzeugleuchte (Fig. 6) relativ schnell auf. Ab einer vorgegebenen, höher gelegenen Schwellentemperatur bzw. ab einem vorgegebenen, höher gelegenen Temperaturschwellwert sorgt der Temperaturfühler 210 in der Schaltungsanordnung 200 dafür, dass die Verschaltung zwischen den jeweils mindestens eine OLED 20 umfassenden Partien 23, 24 geändert wird. Hierdurch lässt sich die Spannungsverschiebung, die aus der Strom-Spannungs-Kennlinie einer OLED 20 hervorgeht zumindest in einer der Anzahl der verschiedenartig miteinander verschaltbaren Stromversorgungen 250 der Schaltungsanordnung 200 entsprechenden Zahl von diskreten Stufen abfedern.

Der voranstehend beschriebene Gedanke ist schematisch in Fig. 4, Fig. 5 und Fig. 6 dargestellt. Im in Fig. 5 dargestellten Fall sind die Stromversorgungen 250 und damit die via dieser an die Stromzufuhr angeschlossenen, jeweils mindestens eine OLED 20 umfassenden Partien 23, 24 der leuchtenden Fläche 22 eines Leuchtmittels 100 in Serie bzw. in Reihe geschaltet. Hierdurch teilt sich die bei einem Betrieb des Leuchtmittels 100 angelegte elektrische Gesamtspannung U auf die zwei Stromversorgungen 250 und damit auf die zwei via der beiden Stromversorgungen 250 bei Betrieb des Leuchtmittels 100 mit der Stromzufuhr verbundenen, jeweils mindestens eine OLED 20 umfassenden Partien 23, 24 der leuchtenden Fläche 22 auf. Bei identisch ausgeführten OLEDs 20 der beiden Partien 23, 24 bedeutet dies, dass die gleiche, jeweils der halben Gesamtspannung U entsprechende Spannung an jeder Partie 23, 24 und deren OLEDs 20 anliegt. Dieser Fall ist bei höheren Temperaturen über beispielsweise 0°C sinnvoll.

Beispielsweise kann eine OLED 20 bei Temperaturen oberhalb von 0 °C etwa 3,5 V Betriebsspannung benötigen. Bei zwei Partien 23, 24 mit jeweils einer gleichen, wie in Fig. 5 in Serie geschalteten OLED 20 fällt somit bei einer Gesamtspannung U von 7,0 V an jeder OLED 20 3,5 V ab. In Fig. 6 sind die Partien 23, 24 parallel geschaltet. Hierdurch liegt die Gesamtspannung U an beiden OLEDs 20 der beiden Partien 23, 24 an, wobei an jeder durch mindestens eine OLED 20 gebildeten Partie die Gesamtspannung U anliegt. Der in Fig. 6 dargestellte Fall ist bei tieferen Temperaturen sinnvoll.

Eine zuvor erwähnte OLED 20 kann bei Temperaturen unterhalb von 0 °C, beispielsweise bei minus 40 °C etwa 7,0 V Betriebsspannung benötigen. Bei einer in Fig. 6 dargestellten Parallelschaltung zweier Partien mit jeweils einer gleichen OLED 20 fällt somit bei einer Gesamtspannung U von 7,0 V an jeder OLED 20 die Gesamtspannung U in Höhe von 7,0 V ab.

Fig. 4 zeigt ein Schaltbild eines Leuchtmittels 100 mit mindestens zwei OLEDs 20 als Lichtquellen und einer Schaltungsanordnung 200 zur Stromversorgung der OLEDs 20 mit wenigstens einem Temperaturfühler 210 und mindestens zwei Stromversorgungen 250, an denen jeweils eine mindestens eine OLED 20 umfassende Partie 23, 24 angeschlossen ist. Die Schaltungsanordnung 200 weist Schaltungsmittel 220 mit drei Schaltern 260 auf. Hierbei erfasst ein von der Schaltungsanordnung 200 umfasster, beispielsweise in wärmeleitemdem Kontakt mit wenigstens einer der OLEDs 20 stehender Temperaturfühler 210 eine momentane Temperatur und entscheidet, ob eine vorgegebene Schwellentemperatur unter- oder überschritten (oder genau erreicht) ist. Die Schaltungsmittel 220 haben dann zur Aufgabe, abhängig von der Temperatur, die Stromversorgungen 250, via denen die jeweils mindestens eine OLED 20 umfassenden Partien 23, 24 der leuchtenden Fläche des Leuchtmittels 100 bei dessen Betrieb mit Strom versorgt werden, beispielsweise paarweise parallel oder in Serie zu schalten.

Denkbar ist, zusätzlich mittels des Temperaturfühlers 210 und einer damit gekoppelten aktiven Stromregelung in Abhängigkeit von der Temperatur die Leuchtdichte der OLEDs 20 der verschiedenen Partien 23, 24 der leuchtenden Fläche 22 des Leuchtmittels 100 und damit die Helligkeit der leuchtenden Fläche 22 insgesamt auf einen weitestgehend konstanten Wert nachzuregeln. Auch kann die Regelung der Leuchtdichte alternativ über ein PWM-Signal (PWM: Pulsweitenmodulation) gesteuert werden. Somit kann die Schaltungsanordnung 200 innerhalb der Serien- (Fig. 5) und/oder Parallelschaltung (Fig. 6) die Leuchtdichte über den Strom nachregeln. Da dies aber nicht endlos möglich ist, wechselt die Schaltung dann zumindest ab einer bestimmten vorgegebenen Schwellentemperatur zur entsprechend anderen Verschaltungsart, in der wiederum innerhalb deren Grenzen mittels Stromanpassung oder PWM nachgeregelt werden kann.

Anstelle beispielsweise nur einer Schwellentemperatur, oberhalb welcher beispielsweise alle Stromversorgungen 250 der Schaltungsanordnung 200 zumindest gruppenweise in Serie geschaltet sind und unterhalb welcher beispielsweise alle Stromversorgungen 250 der Schaltungsanordnung 200 parallel zueinander geschaltet sind, können mehrere vorgegebene Schwellentemperaturen vorgesehen sein, beispielsweise in Anhängigkeit von der Anzahl der vorhandenen, für jeweils eine mindestens eine OLED 20 umfassende Partie 23, 24 der leuchtenden Fläche 22 vorgesehenen Stromversorgungen 250 der Schaltungsanordnung 200. Bei einer höchsten Schwellentemperatur können dabei alle Stromversorgungen 250 zumindest einer Gruppe von zwei, drei, vier oder mehr Stromversorgungen 250 in Serie geschaltet sein, wobei bei einer niedrigsten Schwellentemperatur alle Stromversorgungen zumindest einer Gruppe von zwei, drei, vier oder mehr Stromversorgungen 250, welche oberhalb der höchsten Schwellentemperatur in Serie geschaltet sind, parallel geschaltet sind.

Dabei ist denkbar, dass um so mehr Stromversorgungen 250 in Serie zueinander geschaltet werden, je weiter die vom Temperaturfühler 210 erfasste Temperatur steigt bzw. dass um so weniger Stromversorgungen in Serie zueinander geschaltet sind, je niedriger die vom Temperaturfühler erfasste Temperatur sinkt.

Auch hierbei ist wichtig hervorzuheben, dass die durch Schwellentemperaturen festgelegten Grenzen bei Überschreitung der jeweiligen Grenze aus unterschiedlichen Richtungen nicht identisch sein müssen. Auch kann eine Schwellentemperatur oder können die Schwellentemperaturen andere Werte als die angegebenen aufweisen, beispielsweise um Ungenauigkeiten der Temperaturerfassung auszugleichen, wie sie beispielsweise durch Wärmeleitung zwischen Temperaturfühler 210 und OLED 20 bzw. OLEDs 20 entstehen können.

Zumindest ein Temperaturfühler 210 kann unmittelbar auf einer OLED 20 angeordnet sein, beispielsweise auf einem vorder- oder rückseitigen Glas- oder Kunststoffplättchen einer als Lichtquelle des Leuchtmittels 100 vorgesehenen OLED 20. Vorzugsweise handelt es sich hierbei um eine OLED einer Partie, die unterhalb einer vorgegebenen Schwellentemperatur bzw. oberhalb einer vorgegebenen Schwellenversorgungsspannung abgeschaltet wird.

Das Leuchtmittel 100 kann wie erwähnt in einer beispielsweise in Fig. 7 dargestellten Kraftfahrzeugleuchte 01 beherbergt sein. Zur Beherbergung kann vorgesehen sein, dass mindestens eine OLED 20 des Leuchtmittels 100 in eine Lichtscheibe 03 und/oder eine Rückwand 06 und/oder in ein anderes Bauteil der Kraftfahrzeugleuchte 01 integriert ist.

Die Kraftfahrzeugleuchte 01 kann einen von einem Leuchtengehäuse 02 und wenigstens einer Lichtscheibe 03 zumindest zum Teil umschlossenen Leuchteninnenraum 04 aufweisen.

Die Lichtscheibe 03 der Kraftfahrzeugleuchte 01 kann tiefgezogen oder im Spritzgussverfahren hergestellt sein. Die Lichtscheibe 03 der Kraftfahrzeugleuchte 01 ist bevorzugt aus Kunststoff hergestellt.

Die Beherbergung des Leuchtmittels 100 und/oder zumindest einer OLED 20 des Leuchtmittels 100 kann in dem gegebenenfalls vorgesehenen Leuchteninnenraum 04 vorgesehen sein.

In dem Leuchteninnenraum 03 können eine oder mehrere Lichtquellen:
- des selben Leuchtmittels 100 beherbergt sein, wie eines zuvor beschriebenen Leuchtmittels 100, und/oder
- mindestens eines zur Erfüllung der selben Lichtfunktion vorgesehenen Leuchtmittels beherbergt sein, wie der von einem zuvor beschriebenen Leuchtmittel 100 erfüllten, und/oder
- mindestens eines weiteren Leuchtmittels beherbergt sein, als eines zuvor beschriebenen Leuchtmittels 100, und/oder
- mindestens eines zur Erfüllung einer anderen Lichtfunktion vorgesehenen Leuchtmittels beherbergt sein, als der von einem zuvor beschriebenen Leuchtmittel 100 erfüllten.

Der gegebenenfalls vorgesehene, von dem Leuchtengehäuse 02 und zumindest einer Lichtscheibe 03 zumindest zum Teil umschlossene Leuchteninnenraum 04 der Kraftfahrzeugleuchte 01 beherbergt vorzugsweise eine Blende 05.

Die Blende 05 teilt den Leuchteninnenraum 04 vorzugsweise in einen durch die Lichtscheibe 03 hindurch gesehen vor der Blende 05 liegenden und durch die Lichtscheibe 03 hindurch einsehbaren, ersten Bereich 41 und in einen durch die Lichtscheibe 03 hindurch gesehen hinter der Blende 05 liegenden und durch die Lichtscheibe 03 hindurch nicht einsehbaren, zweiten Bereich 42 ein.

Ein gegebenenfalls vorgesehener Träger 10 zumindest eines von der Kraftfahrzeugleuchte 01 beherbergten Leuchtmittels 100 kann vorzugsweise an einer durch die Blende 05 beispielsweise von einer Vorderseite 51 der Blende 05 zu einer Rückseite 52 der Blende 05 hindurchreichenden Partie 30 elektrische Kontakte, aufweisen. Mit den elektrischen Kontakten kann wenigstens die zumindest eine vom Träger 10 gehaltene OLED 20 des Leuchtmittels 100 mit Strom versorgt werden.

Die Kraftfahrzeugleuchte 01 kann mehrere beim Blick von außerhalb des Leuchteninnenraums 04 durch die Lichtscheibe 03 hindurch gesehen räumlich neben- und/oder hintereinander angeordnete, zuvor beschriebene Leuchtmittel 100 aufweisen.

Alternativ oder zusätzlich kann die Kraftfahrzeugleuchte 01 mindestens ein zuvor beschriebenes Leuchtmittel 100 aufweisen, sowie mindestens ein zusätzliches in dem Leuchteninnenraum 04 beherbergtes und zur Erfüllung zumindest der selben oder einer weiteren Lichtfunktion der Kraftfahrzeugleuchte 01 vorgesehenes Leuchtmittel mit wenigstens einer Lichtquelle.

Wird eine in Fig. 7 dargestellte, entsprechend ausgestattete Kraftfahrzeugleuchte 01 mit einem Leuchtmittel 100 mit zwei oder mehr bei Betrieb des Leuchtmittels 100 eine zur Erfüllung mindestens einer Lichtfunktion der Kraftfahrzeugleuchte 01 vorgesehene leuchtende Fläche 22 bildenden OLEDs 20 als Lichtquellen:
- bei einer Umgebungstemperatur unterhalb einer vorgegebenen Schwellentemperatur und/oder
- bei einer Versorgungsspannung der OLEDs 20 oberhalb einer vorgegebenen Schwellenversorgungsspannung
in Betrieb genommen, so findet durch die vermittels der Segmentierung der leuchtenden Fläche 22 getrennte Stromzufuhr der jeweils eine oder mehr OLEDs 20 umfassenden Partien 23, 24 der leuchtenden Fläche 22 eine Anpassung der Helligkeit der leuchtenden Fläche 22 statt, und/oder eine Anpassung einer zur Aufrechterhaltung eines für einen ordnungsgemäßen Betrieb der OLEDs 20 des Leuchtmittels 100 erforderlichen, im Wesentlichen gleichbleibenden Stroms notwendigen Versorgungsspannung. Beispielsweise können die OLEDs 20 wenigstens einer Partie 23, 24 der durch die bei Betrieb des Leuchtmittels 100 durch dessen als Lichtquellen vorgesehenen OLEDs 20 gebildeten, zur Erfüllung wenigstens einer Lichtfunktion der Kraftfahrzeugleuchte 01 vorgesehenen leuchtenden Fläche 22 bis auf eine verbleibende Partie 24 abgeschaltet bleiben. Dabei ist denkbar, dass bis auf eine verbleibende Partie 24 um so mehr Partien 23 abgeschaltet werden, je weiter die vom Temperaturfühler 210 erfasste Temperatur sinkt bzw. dass um so weniger Partien 23 abgeschaltet sind, je höher die vom Temperaturfühler 210 erfasste Temperatur steigt und/oder dass bis auf eine verbleibende Partie 24 um so mehr Partien 23 abgeschaltet werden, je höher die von den Versorgungsspannungsüberwachungsmitteln erfasste Versorgungsspannung steigt bzw. dass um so weniger Partien 23 abgeschaltet sind, je weiter die von den Versorgungsspannungsüberwachungsmitteln erfasste Versorgungsspannung fällt. Oberhalb einer vorgegebenen Schwellentemperatur und/oder unterhalb einer vorgegebenen Schwellenversorgungsspannung findet damit ein Normalbetrieb aller als Lichtquellen des Leuchtmittels 100 dienenden OLEDs 20 statt.

Zumindest eine Lichtquelle eines zur Erfüllung zumindest der selben oder einer weiteren Lichtfunktion der Kraftfahrzeugleuchte 01 vorgesehenen, zusätzlichen Leuchtmittels kann beim Blick von außerhalb des Leuchteninnenraums 04 durch die Lichtscheibe 03 hindurch gesehen hinter mindestens einer beispielsweise von einem Träger 10 im Leuchteninnenraum 04 gehaltenen OLED 20 eines Leuchtmittels 100 mit mindestens zwei OLEDs 20 als Lichtquellen angeordnet sein, so dass wenigstens eine OLED 20 des Leuchtmittels 100 im direkten Strahlengang des von der zumindest einen Lichtquelle des zur Erfüllung zumindest der selben oder einer weiteren Lichtfunktion der Kraftfahrzeugleuchte 01 vorgesehenen, zusätzlichen Leuchtmittels zur Lichtscheibe 03 liegt.

Ein mindestens eine OLED 20 des Leuchtmittels 100 mit mindestens zwei OLEDs 20 als Lichtquellen im Leuchteninnenraum 04 haltender Träger 10 des Leuchtmittels 100 kann mindestens eine beispielsweise zentrale Lichtöffnung beispielsweise für von einer beim Blick durch eine Lichtscheibe 03 einer Kraftfahrzeugleuchte 01 hindurch gesehen hinter dem Träger 10 angeordneten Lichtquelle eines zur Erfüllung zumindest der selben oder einer weiteren Lichtfunktion der Kraftfahrzeugleuchte 01 vorgesehenen, zusätzlichen, beispielsweise mit einem zuvor beschriebenen Leuchtmittel 100 identischen Leuchtmittels abgestrahltes Licht aufweisen.

Durch das Unterbringen mehrere OLEDs 20 in einer Kraftfahrzeugleuchte 01 kann es zu gegenseitigen Abschattungen deren leuchtender Flächen kommen, was zur Folge hat, das einzelne Winkelbereiche eine zu geringe Lichtstärke aufweisen in Bezug auf die beispielsweise gesetzlich geforderten, von einer Lichtverteilung vorgegebenen Lichtwerte. Durch beispielsweise eine oder mehrere, beispielsweise zentrale Lichtöffnungen zumindest in einem oder mehreren gegebenenfalls vorgesehenen Trägern 10 der vorderen, der Lichtscheibe näheren Leuchtmitteln 100 mehrerer beim Blick von außerhalb des Leuchteninnenraums 04 durch die Lichtscheibe 03 hindurch gesehen räumlich neben- und/oder hintereinander angeordneter, zuvor beschriebener oder unterschiedlicher Leuchtmittel 100 kann dieser gegenseitigen Abschattung zur Erhöhung der Lichtwerte in einzelnen Winkelbereichen entgegengewirkt werden.

Eine gegebenenfalls in einem Träger 10 vorgesehene zentrale Öffnung kann zumindest zum Teil von einer OLED 20 abgedeckt sein.

Zumindest zwei von mindestens zwei Lichtfunktionen der Kraftfahrzeugleuchte 01 können unterschiedliche Lichtfarben aufweisen.

Wichtig ist hervorzuheben, dass die Kraftfahrzeugleuchte 01 zusätzlich zu der durch die OLEDs 20 des mit diesen als Lichtquellen ausgestatteten Leuchtmittels 100 zu erfüllenden Lichtfunktion über mindestens eine konventionell vermittels beispielsweise eines oder mehrerer beispielsweise in einer separaten Reflektorkammer untergebrachten Leuchtmittels und/oder eines Lichtleiters verwirklichte, zusätzliche Lichtfunktion verfügen kann. Bei dieser mindestens einen zusätzlichen Lichtfunktion kann es sich beispielsweise um eine solche Lichtfunktion handeln, deren Lichtwerte und/oder deren gesetzliche Vorschriften vermittels flächiger Lichtquellen wie mehrerer OLEDs 20 nur unter hohem Aufwand zu erfüllen sind.

Alternativ oder zusätzlich können eine oder mehrere Lichtfunktionen unabhängig von der Kraftfahrzeugleuchte 01 untergebracht sein. Beispielsweise können eine der Erfüllung einer Nebelschlusslichtfunktion dienende Nebelschlussleuchte und/oder ein der Erfüllung einer Rückfahrlichtfunktion dienender Rückfahrscheinwerfer zusammen in einem Modul der Kraftfahrzeugleuchte 01 örtlich ausgelagert sein, während sich in einem anderen Bereich der Kraftfahrzeugleuchte 01 die verbleibenden Lichtfunktionen konzentrieren. Ein Grund hierfür kann beispielsweise sein, dass die Nebelschlusslichtfunktion einen Mindestabstand zum Bremslichtfunktion aufgrund gesetzlicher Vorgaben einhalten muss. Durch diese Abtrennung ist dann zusätzlich eine größere Gestaltungsfreiheit gegeben.

Sowohl ein beschriebenes Leuchtmittel 100, als auch eine mit mindestens einem solchen Leuchtmittel 100 ausgestattete Kraftfahrzeugleuchte 01 erlauben die Durchführung eines Verfahrens zum Betrieb mindestens eines Leuchtmittels 100 mit wenigstens zwei OLEDs 20 als Lichtquellen und/oder einer mit mindestens einem Leuchtmittel 100 mit wenigstens zwei OLEDs 20 als Lichtquellen ausgestatteten Kraftfahrzeugleuchte 01.

Ein entsprechendes Verfahren sieht vor, dass:
- eine durch mehrere als Lichtquellen des zur Erfüllung einer oder mehrerer Lichtfunktionen vorgesehenen Leuchtmittels 100 dienenden OLEDs 20 gebildete, bei Betrieb des Leuchtmittels 100 leuchtende Fläche 22 in zwei oder mehr Partien 23, 24 segmentiert ist oder wird,
- jede Partie 23, 24 mindestens eine OLED 20 umfasst, und
- die Segmentierung vorzugsweise gleichmäßig über die leuchtende Fläche 22 des Leuchtmittels 100 hinweg erfolgt.

Das Verfahren sieht ferner vor:
- die Stromzufuhr zumindest der OLEDs 20 unterschiedlicher Partien 23, 24 jeweils separat zu schalten, und
- abhängig von einem Ergebnis eines Vergleichs:
   - mindestens einer Temperatur, beispielsweise der Temperatur einer oder mehrerer OLEDs 20 und/oder einer Umgebungstemperatur einer oder mehrerer OLEDs 20, beispielsweise der Temperatur in einem Leuchteninnenraum 04, mit wenigstens einer Schwellentemperatur und/oder
   - mindestens einer zur Stromversorgung einer oder mehrerer OLEDs 20 vorgesehenen Versorgungsspannung mit wenigstens einer Schwellenversorgungsspannung
- zur Kompensation einer erhöhten Helligkeit der OLEDs der leuchtenden Fläche insbesondere:
   - bei tiefen Temperaturen von beispielsweise unter 0°C und/oder
   - bei zur Aufrechterhaltung eines zum ordnungsgemäßen Betrieb der OLEDs erforderlichen, im Wesentlichen konstanten Stroms notwendigen erhöhten Versorgungsspannung vorgesehen ist, bis auf mindestens eine verbleibende Partie 24 wenigstens eine Partie 23 von der Stromzufuhr zu trennen und/oder
   - zur Sicherstellung einer zur Aufrechterhaltung eines zum ordnungsgemäßen Betrieb der OLEDs 20 erforderlichen, im Wesentlichen konstanten Stroms notwendigen erhöhten Versorgungsspannung vorgesehen ist, die Verschaltung der die Stromzufuhr der jeweils mindestens eine OLED 20 umfassenden Partien 23, 24 der leuchtenden Fläche 22 des Leuchtmittels 100 besorgenden Stromversorgungen 250, 251, 252 zu ändern.

Das Verfahren kann einzelne Merkmale oder eine beliebige Kombination von zwei oder mehreren Merkmalen eines zuvor beschriebenen Leuchtmittels 100 oder einer mit mindestens einem solchen Leuchtmittel 100 ausgestatteten Kraftfahrzeugleuchte 01 nebst einer oder mehrerer der beschriebenen und/oder getroffenen Maßnahmen zur Schaltung dessen als OLED 20 ausgeführter Lichtquellen aufweisen.

Wichtig ist hervorzuheben:
- Wird die Segmentierung der gesamten leuchtenden Fläche nicht nur zweiteilig sondern vielteilig gestaltet, so können die Segmente der leuchtenden Fläche 22 bildenden OLEDs 20 zu elektronisch zusammen verschaltenen Partien 23, 24 der leuchtenden Fläche 22 zusammengefasst werden. Hierbei werden bevorzugt nicht nebeneinander liegende OLEDs 20 miteinander zusammen geschaltet wie dies anhand der unterschiedlichen Partien 23, 24 der leuchtenden Fläche 22 zugeordneten OLEDs 20 in Fig. 2 ersichtlich ist.
- Die Teilüberbrückung von durch jeweils mindestens eine OLED 20 umfassenden Partien 23, 24 der leuchtenden Fläche 22 wird nötig, da bei tiefen Temperaturen von beispielsweise -40 °C die OLEDs 20 eine signifikant höhere Spannungsaufnahme bei etwa gleicher Stromaufnahme haben, als z. B. bei 0 °C. Gleichzeitig steigt auch deren Wirkungsgrad und damit deren Helligkeit deutlich an.
- Durch die Selbsterwärmung der OLEDs 20 im Betrieb wärmt sich die gesamte leuchtende Fläche 22 und auch der Leuchteninnenraum 04 relativ schnell auf. Diese Selbsterwärmung wird aber nur mit einem Teil der gesamten leuchtenden Fläche 22 durchgeführt. Ab einer vorgegebenen, höher gelegenen Schwellentemperatur sorgt der Temperaturfühler 210 in der Schaltungsanordnung 200 dafür, dass die eine oder mehreren OLEDs der noch überbrückten mindestens einen Partie 23 (wieder) in Betrieb genommen werden. Die Aufwärmung kann relativ schnell erfolgen, da die OLEDs 20 einer Partie 23, 24 aufgrund der Segmentierung immer nur die direkte Nachbarschaft innerhalb der leuchtenden Fläche 22 erwärmen muss. Insgesamt lässt sich hierdurch die hauptsächlich temperaturbedingte Spannungsverschiebung, die aus der I-U-Kennlinienschaar von OLEDs 20 hervorgeht abfedern. Gleichzeitig wird nun im Warmzustand die gesamte leuchtende Fläche 22 betrieben.
- Beim Betrieb des Leuchtmittels 100 unterhalb einer vorgegebenen Schwellentemperatur von beispielsweise 0 °C werden nur die OLEDs 20 betrieben, welche zu der mit der Stromzufuhr verbunden verbleibenden Partie 24 zugehörig sind. Diese wärmen sich im Betrieb auf und erwärmen so gleichzeitig ihre Umgebung und damit auch die OLEDs 20, welche zu der von der Stromzufuhr getrennten bzw. trennbaren Partie 23 zugehörig sind. Sobald der Temperaturfühler 210 ein Erreichen oder Überschreiten der vorgegebenen Schwellentemperatur registriert, werden die OLEDs 20, welche zu der von der Stromzufuhr getrennten bzw. trennbaren Partie 23 zugehörig sind zugeschaltet. Dieser Temperaturübergang findet beispielsweise nur einmal nach Anschalten der entsprechenden Lichtfunktion bzw. des entsprechenden Leuchtmittels 100 und auch nur bei tiefen Temperaturen statt, da sich das Leuchtmittel 100 dann erwärmt hat und die Temperatur dann in der Regel nicht wieder unter den Temperaturschwellwert fällt.
- Denkbar ist, dass sich bei jedem Anschalten der Lichtfunktion bzw. des entsprechenden Leuchtmittels 100 die Anschaltreihenfolge ändert: Beim ersten Einschalten wird erst die Partie 23 betrieben und dann die Partie 24 zugeschalten und beim darauffolgenden Einschalten erst die Partie 24 und dann die Partie 23 und so weiter, bis wieder von vorn begonnen wird. Diese Anschaltreihenfolge kann auch über eine Betriebszeitmessung geregelt werden, so dass die Reihenfolge so geändert wird, dass beide Partien 23, 24 eine zumindest in etwa gleiche Zeit in Betrieb sind. Durch dieses Vorgehen wird die Alterung und eine damit einhergehende Änderung der Leuchtdichte und Farbe mit der Betriebszeit der OLEDs der verschiedenen Partien 23, 24 gleichmäßig gehalten und Unterschiede zwischen den Partien 23, 24 werden minimiert.

Die Erfindung ist insbesondere im Bereich der Herstellung von Kraftfahrzeugleuchten gewerblich anwendbar.

### Bezugszeichenliste

- 01: Kraftfahrzeugleuchte
- 02: Leuchtengehäuse
- 03: Lichtscheibe
- 04: Leuchteninnenraum
- 05: Blende
- 06: Rückwand
- 10: Träger
- 20: OLED
- 22: leuchtende Fläche
- 23: Partie
- 24: Partie
- 30: durch die Blende 05 hindurchreichende Partie des Trägers
- 41: erster Bereich des Leuchteninnenraums 04, vor der Blende 05 liegend
- 42: zweiter Bereich des Leuchteninnenraums 04, hinter der Blende 05
- 51: Vorderseite der Blende 05
- 52: Rückseite der Blende 05
- 100: Leuchtmittel
- 200: Schaltungsanordnung
- 210: Temperaturfühler
- 220: Schaltungsmittel
- 250: Stromversorgung
- 251: Stromversorgung einer ersten Partie
- 252: Stromversorgung einer zweiten Partie
- 260: Schalter

- U: elektrische Gesamtspannung

## Patentansprüche

1. Leuchtmittel (100) mit mindestens zwei OLEDs (20) als Lichtquellen, welche bei Betrieb des Leuchtmittels eine leuchtende Fläche zur Erfüllung mindestens einer Lichtfunktion bilden, wobei:
- die leuchtende Fläche (22) in mindestens zwei Partien (23, 24) zu jeweils wenigstens einer OLED (20) segmentiert ist,
- wenigstens eine erste OLED (20) Teil einer ersten Partie (23) und wenigstens eine zweite OLED (20) Teil einer zweiten Partie (24) ist, und wenn die leuchtende Fläche (22) in drei oder mehr Partien (23, 24) segmentiert ist, zumindest eine dritte OLED (20) Teil einer dritten Partie (23, 24) ist, und so weiter,
- die Segmentierung eine vorzugsweise gleichmäßige, regelmäßige Verteilung der OLEDs (20) der verschiedenen Partien (23, 24) über die leuchtende Fläche (22) hinweg vorsieht,
- eine Schaltungsanordnung (200) zur getrennten Stromzufuhr wenigstens der OLEDs (20) unterschiedlicher Partien (23, 24) vorgesehen ist.

2. Leuchtmittel nach Anspruch 1, wobei wenn zwei oder mehrere OLEDs (20) eine Partie (23, 24) der segmentierten leuchtenden Fläche (22) bilden, die gemäß der Segmentierung vorzugsweise gleichmäßige, regelmäßige Verteilung der OLEDs (20) der verschiedenen Partien (23, 24) über die leuchtende Fläche (22) hinweg vorsieht, dass sich innerhalb der leuchtenden Fläche (22) zwischen zwei OLEDs (20) einer Partie (23) zumindest je eine OLED (20) der mindestens einen verbleibenden Partie (24) befindet.

3. Leuchtmittel nach Anspruch 1 oder 2, wobei wenn zwei oder mehr OLEDs (20) je Partie (23, 24) vorgesehen sind, die OLEDs (20) jeder Partie (23, 24) parallel und/oder in Serie (in Reihe) elektrisch verschaltet sind.

4. Leuchtmittel nach Anspruch 1, 2 oder 3, wobei die Schaltungsanordnung (200) Schaltungsmittel (220) umfasst, welche in Abhängigkeit von der zur Aufrechterhaltung eines bei eingeschaltetem Leuchtmittel (100) zum ordnungsgemäßen Betrieb dessen OLEDs (20) erforderlichen, im Wesentlichen gleichbleibenden Stroms notwendigen Spannung die Partien (23, 24) der leuchtenden Fläche (22) bildenden OLEDs (20) segmentweise zu- und abschaltet.

5. Leuchtmittel nach Anspruch 4, wobei die Schaltungsmittel (220) Versorgungsspannungsüberwachungsmittel mit einem mindestens einer von ihnen erfassten Versorgungsspannung proportionalen Ausgangssignal zur Erfassung der Höhe einer Versorgungsspannung der OLEDs (20) des Leuchtmittels (100) umfassen.

6. Leuchtmittel nach Anspruch 4 oder 5, wobei die Schaltungsmittel (220) einen Temperaturfühler (210) mit einem einer von ihm erfassten Temperatur proportionalen Ausgangssignal zur Erfassung wenigstens einer Temperatur aufweisen.

7. Leuchtmittel nach einem der voranstehenden Ansprüche, wobei die Schaltungsanordnung (200) Schaltungsmittel (220) umfasst, welche die elektrische Verschaltung der via der Schaltungsanordnung (200) bei Betrieb des Leuchtmittels (100) mit Strom versorgten OLEDs (20) in Abhängigkeit von einer von mindestens einem Temperaturfühler (210) erfassten Temperatur steuern.

8. Leuchtmittel nach Anspruch 6 oder 7, wobei zumindest ein Temperaturfühler (210) unmittelbar auf einer OLED (20) angeordnet ist.

9. Leuchtmittel nach einem der voranstehenden Ansprüche, wobei die Schaltungsanordnung (200) ein oder mehrere Proportional- und/oder Differential- und/oder Integralregler (P-, D-, I-Glieder) und/oder Schalter umfasst.

10. Kraftfahrzeugleuchte (01) mit wenigstens einem zur Erfüllung wenigstens einer Lichtfunktion der Kraftfahrzeugleuchte (01) vorgesehenen Leuchtmittel (100) mit wenigstens zwei OLEDs (20) als Lichtquellen, **gekennzeichnet durch** mindestens ein Leuchtmittel (100) nach einem der voranstehenden Ansprüche.

11. Kraftfahrzeugleuchte nach Anspruch 10, wobei in einem von einem Leuchtengehäuse (02) und wenigstens einer Lichtscheibe (03) zumindest zum Teil umschlossenen Leuchteninnenraum (04) eine oder mehrere Lichtquellen:
- des selben Leuchtmittels (100) beherbergt sind, wie das Leuchtmittel (100), nach einem der Ansprüche 1 bis 9, und/oder
- mindestens eines zur Erfüllung der selben Lichtfunktion vorgesehenen Leuchtmittels beherbergt sind, wie der von dem Leuchtmittel (100) nach einem der Ansprüche 1 bis 9 erfüllten, und/oder
- mindestens eines weiteren Leuchtmittels beherbergt sind, als dem Leuchtmittel (100) nach einem der Ansprüche 1 bis 9, und/oder
- mindestens eines zur Erfüllung einer anderen Lichtfunktion vorgesehenen Leuchtmittels beherbergt sind, als der von dem Leuchtmittel (100) nach einem der Ansprüche 1 bis 9 erfüllten.

12. Kraftfahrzeugleuchte nach Anspruch 10 oder 11, wobei sie als Heckleuchte oder als in einem Außenrückblickspiegel untergebrachte Wiederholblinkleuchte ausgeführt ist.

13. Kraftfahrzeugleuchte nach Anspruch 10, 11 oder 12, wobei mindestens eine OLED (20) des Leuchtmittels (100) in eine Lichtscheibe (03) und/oder eine Rückwand (06) vorzugsweise eines von einer Lichtscheibe (03) und einem Leuchtengehäuse (02) zumindest zum Teil umschlossenen Leuchteninnenraums (04) und/oder in ein anderes Bauteil der Kraftfahrzeugleuchte (01) integriert ist.

14. Verfahren zum Betrieb mindestens eines Leuchtmittels (100) mit wenigstens zwei OLEDs (20) als Lichtquellen nach einem der Ansprüche 1 bis 9 und/oder einer Kraftfahrzeugleuchte (01) mit mindestens einem Leuchtmittel (100) mit wenigstens zwei OLEDs (20) als Lichtquellen nach einem der Ansprüche 10 bis 13, wobei:
- eine durch mehrere als Lichtquellen des zur Erfüllung einer oder mehrerer Lichtfunktionen vorgesehenen Leuchtmittels (100) dienenden OLEDs (20) gebildete, bei Betrieb des Leuchtmittels (100) leuchtende Fläche (22) in zwei oder mehr Partien (23, 24) segmentiert wird,
- jede Partie (23, 24) mindestens eine OLED (20) umfasst, und
- die Segmentierung vorzugsweise gleichmäßig über die bei Betrieb des Leuchtmittels (100) leuchtende Fläche (22) hinweg erfolgt,
wobei das Verfahren vorsieht:
- die Stromzufuhr zumindest der OLEDs (20) unterschiedlicher Partien (23, 24) jeweils separat zu schalten, und
- abhängig von einem Ergebnis eines Vergleichs:
- mindestens einer Temperatur mit wenigstens einer Schwellentemperatur und/oder
- mindestens einer zur Stromversorgung einer oder mehrerer OLEDs (20) vorgesehenen Versorgungsspannung mit wenigstens einer Schwellenversorgungsspannung
- zur Kompensation einer erhöhten Helligkeit der OLEDs (20) der leuchtenden Fläche (22) vorgesehen ist, bis auf mindestens eine verbleibende Partie (24) wenigstens eine Partie (23) von der Stromzufuhr zu trennen und/oder
- zur Sicherstellung einer zur Aufrechterhaltung eines zum ordnungsgemäßen Betrieb der OLEDs (20) erforderlichen, im Wesentlichen konstanten Stroms notwendigen erhöhten Versorgungsspannung vorgesehen ist, die Verschaltung von die Stromzufuhr der jeweils mindestens eine OLED (20) umfassenden Partien (23, 24) der leuchtenden Fläche (22) des Leuchtmittels (100) besorgenden Stromversorgungen (250, 251, 252) zu ändern.
